(19) Europäisches Patentamt / European Patent Office / Office européen des brevets

(11) **EP 4 645 636 A1**

(12) **EUROPEAN PATENT APPLICATION**
published in accordance with Art. 153(4) EPC

(43) Date of publication:
05.11.2025 Bulletin 2025/45

(21) Application number: 24749709.2

(22) Date of filing: 31.01.2024

(51) International Patent Classification (IPC):
H02J 7/00 (2006.01)     A47L 9/28 (2006.01)

(52) Cooperative Patent Classification (CPC):
A47L 9/28; A47L 11/282; A47L 11/40; H02J 7/00;
H02J 7/02; H02J 7/04; Y02E 60/10

(86) International application number:
PCT/CN2024/074958

(87) International publication number:
WO 2024/160230 (08.08.2024 Gazette 2024/32)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 31.01.2023 CN 202310080267
08.12.2023 CN 202323354964 U

(71) Applicant: Dreame Innovation Technology
(Suzhou) Co., Ltd.
Suzhou, Jiangsu 215104 (CN)

(72) Inventors:
• WANG, Chengbing
Suzhou, Jiangsu 215104 (CN)

• WEI, Yantong
Suzhou, Jiangsu 215104 (CN)
• CHENG, Xiaozhong
Suzhou, Jiangsu 215104 (CN)
• ZHENG, Shangzhen
Suzhou, Jiangsu 215104 (CN)
• CHEN, Mingming
Suzhou, Jiangsu 215104 (CN)
• GENG, Weidong
Suzhou, Jiangsu 215104 (CN)
• WANG, Longxiong
Suzhou, Jiangsu 215104 (CN)

(74) Representative: Gill Jennings & Every LLP
The Broadgate Tower
20 Primrose Street
London EC2A 2ES (GB)

(54) **CHARGING BASE, CHARGER, AND CLEANING SYSTEM AND CHARGING METHOD AND STANDBY METHOD THEREFOR**

(57) The present invention discloses a charging base station, a charger, and a cleaning system and a charging method and a standby method therefor. The charging base station includes a base station body and a charger. The base station body is provided with a placement portion, and the placement portion allows a cleaning device to be connected. The charger is configured to supply power to the cleaning device and has multiple output voltage levels. When the charger is in a standby state, a standby voltage of the charger is less than a preset working voltage of the charger. The charging base station, the charger, and the cleaning system and the charging method and the standby method therefor provided in the present invention can greatly reduce a standby power consumption of the device, and reduce the sparking risk occurring when a cleaning device is charged.

FIG. 1

**Description**

**TECHNICAL FIELD**

The present invention relates to the technical field of cleaning appliances, and in particular to a charging base station, a charger, and a cleaning system and a charging method and a standby method therefor.

**BACKGROUND**

The existing charging base stations for floor scrubber typically feature only one charging voltage level, which normally maintains a charging voltage of 25-35V after being connected to an external AC power. The charging base station not only plays a role of charging the cleaning device, but also needs to provide a voltage required to maintain a normal function of an entire cleaning system. Therefore, in order to ensure that the functions of the floor scrubber can be used normally, the charging base station is required to be able to supply power all the time. Hence, after the charging for the cleaning device of the floor scrubber is completed, the charging base station still maintains a high voltage. However, sustaining a high-voltage charging capability at this time results in an increased power consumption for the charging base station in a standby state, which is environmental unfriendly. In addition, when the charging base station directly charges the floor scrubber with a relatively high voltage, it is prone to a safety hazard of sparking at contact. Consequently, the existing charging base station necessitates improvements.

The information disclosed in this background is only intended to enhance the understanding of the overall background of the present invention and shall not be regarded as an acknowledgment or any form of suggestion that the information constitutes the prior art already known to those skilled in the art.

**SUMMARY**

The object of the present invention is to provide a charging base station, a charger, a cleaning system and a charging method and a standby method therefor, which can reduce a power consumption of the cleaning device and reduce the sparking hazard when the cleaning device is charged.

To solve the above technical problems, the present invention provides the technical solutions as follows.

The present invention provides a charging base station, including:

a base station body, provided with a placement portion, the placement portion allowing a cleaning device to be connected; and

a charger, configured to supply power to the cleaning device and provided with multiple output voltage levels;

where, when the charger is in a standby state, a standby voltage of the charger is less than a preset working voltage of the charger. The present solution enables the charging base station to be in a low power consumption state during no-load standby, thereby reducing a device power consumption and satisfying the requirements of energy saving and environmental protection.

The charging base station, as a base station of the cleaning device, can cooperate with the cleaning device to realize functions such as charging, self-cleaning, hot air drying, automatic water supply and discharge, time scheduling, etc.; a communication occurring during a cooperation of the cleaning device and the charging base station can be implemented as a wired communication by an abutment of communication terminals, or can be implemented as a wireless communication therebetween within a close range by providing matching wireless communication components on the cleaning device and the charging base station.

In an embodiment of the present invention, when the charger is unloaded or dormant, or in a process of establishing a stable electrical connection or communication connection between the charger and the cleaning device, the charger is in a standby state. By limiting the standby state of the charger, the present solution limits the charger to be in a low power consumption state.

In an embodiment of the present invention, the standby state of the charger includes a no-load mode and a dormant mode. When the cleaning device is detached from the base station body, the charger is switched to the no-load mode, and when the cleaning device is fully charged, the charger is switched to the dormant mode, where the dormant mode refers to a state in which the charging base station is connected to the cleaning device but not in an operating mode. In the present invention, the charger has multiple states; and according to a charging requirement of the cleaning device, the charger can flexibly switch between the no-load mode and the dormant mode to ensure a low power consumption of the charger.

In an embodiment of the present invention, in the standby state, a power consumption of the charger is less than or equal to 0.5 W. The present solution limits the power consumption of the charger so that the cleaning system meets energy saving and environmental protection requirements.

In an embodiment of the present invention, when a stable electrical connection has been established between the cleaning device and the, the charger is switched from the standby state to a charging state, and a power consumption of the charger in the standby state is less than that of the charger in the charging state. The present solution achieves a switching of charging voltage by establishing a communication between the charging base station and the cleaning device, thereby avoiding the problem of sparking during contact.

In an embodiment of the present invention, the charger is electrically connected to the cleaning device, and when the charger receives a first signal from the cleaning device, the charger enters the charging state, and a voltage of the charger is switched from a first output voltage to a second output voltage, wherein the standby voltage is referred to as the first output voltage, and the preset working voltage is referred to as a second output voltage. By means of signal communication, the present solution allows a clear voltage switching timing of the charger.

In an embodiment of the present invention, the first signal is a trigger signal for the charger to enter the charging state, where the first signal is a signal indicating that the charger and the cleaning device have successfully completed a handshake.

In an embodiment of the present invention, as soon as the cleaning device contacts the placement portion, the charger and the cleaning device enter a process of establishing a stable electrical connection, and the charger is ready to receive the first signal. When the cleaning device is placed in alignment on the placement portion and the cleaning device and the charger have successfully completed a handshake, the charger receives the first signal. The present solution correlates a relative position of the cleaning device and the placement portion with triggering of the first signal. The successful handshake established between the cleaning device and the charger can ensure that the cleaning device has been placed in alignment on the placement portion, ensuring that no electric sparks will occur during charging.

In an embodiment of the present invention, the charger includes a first controller, configured to receive the first signal and configured to output a first voltage adjustment signal under triggering of the first signal. The present invention performs a voltage adjustment by signal communication to ensure that a charging voltage outputs a preset working voltage required for charging the cleaning device only under the condition of stable electrical connection.

In an embodiment of the present invention, a trigger mode of the first signal includes one or more of a communication handshake trigger, a passive switch trigger, an active switch trigger and a wireless charging induction trigger;

in a communication handshake trigger mode, the charging base station and the cleaning device are provided with corresponding matching communication terminals respectively to realize a communication connection, thereby realizing a signal trigger under a preset condition;

in a passive switch trigger mode, the charging base station is provided with a micro switch associated with an output state of the charger, and a state change of the micro switch is actuated during an operation process of placing the cleaning device on the charging base station, thereby triggering a corresponding signal;

in an active switch trigger mode, the charging base station is provided with a switching button associated with an output state of the charger, and after the cleaning device is placed on the charging base station, an active trigger is realized by operating the switching button;

in a wireless charging induction trigger mode, the charging base station and the cleaning device are provided with matching wireless charging components respectively, and when a wireless induction intensity therebetween exceeds a preset threshold, a corresponding signal output is triggered. The first signal of the present solution can be triggered in a variety of modes, resulting in a wide application.

In an embodiment of the present invention, the cleaning device and the first controller are in a contact-type electrical connection; the charger includes a communication interface; and when the cleaning device is placed in alignment on the placement portion, an electrical connection is established between the cleaning device and the first controller through the communication interface.

During a process of establishing an electrical connection between the cleaning device and the first controller, the first controller verifies the first signal through a protocol of the communication interface; only when the first signal passes a verification, the first controller receives the first signal and outputs the first voltage adjustment signal. The present solution verifies whether a communication handshake is established successfully through an interface protocol to ensure that charging is performed after an electrical connection between the cleaning device and the first controller is established, thereby reducing the risk of electric sparks.

In an embodiment of the present invention, the charger includes a first voltage adjustment unit, which is electrically connected to the first controller and the cleaning device and configured to charge the cleaning device; and under a trigger of the first voltage adjustment signal, an output voltage of the first voltage adjustment unit is switched from the first output voltage to the second output voltage. In the present solution, charging is performed after an electrical connection is established between the cleaning device and the first controller, thereby reducing the risk of electric sparks.

In an embodiment of the present invention, in the process of establishing a stable electrical connection between the cleaning device and the charger, the output voltage of the first voltage adjustment unit is a third output voltage. In the charging state, the output voltage of the first voltage adjustment unit is the second output voltage, and when the charger is in the dormant mode or the no-load mode, the output voltage of the first voltage adjustment unit is a third output voltage, where the second output voltage is greater than or equal to a rated charging voltage of the charger, and the first output voltage and the third output voltage are less than the rated charging voltage of the charger. The present solution adjusts an output voltage of the charger in different modes to meet functional requirements while having a lower power consumption and less sparking risk.

In an embodiment of the present invention, the third output voltage is less than or equal to the first output voltage; and

the first output voltage is 10% to 50% of the second output voltage.

The second output voltage is greater than or equal to 25 V. The charger of the present solution has multiple output voltage levels, which can meet the functional requirements while having a lower power consumption and less sparking risk.

In an embodiment of the present invention, the first voltage adjustment unit has a constant current mode and a constant voltage mode; and when the first voltage adjustment unit receives the first voltage adjustment signal, the first voltage adjustment unit increases an output voltage and an output current to the cleaning device. The present solution changes the voltage under signal regulation to adapt to the use requirements of the charger under different working conditions, which can reduce power consumption and sparking risk.

In an embodiment of the present invention, a charging mode between the first voltage adjustment unit and the cleaning device includes a wired charging and a wireless charging. Both the wired charging and the wireless charging are applicable to the present solution.

In an embodiment of the present invention, the first voltage adjustment unit includes a charging terminal. When the cleaning device is placed in alignment on the placement portion, a stable electrical connection between the charging terminal and the charging port of the cleaning device is established, and the charger receives the first signal.

In an embodiment of the present invention, the first controller is configured to output a second voltage adjustment signal under a trigger of a second signal or a third signal of the cleaning device;

the second signal is a trigger signal for the charger to enter a dormant mode, where the second signal includes a feedback signal sent to the charger after the cleaning device is fully charged;

the third signal is a trigger signal for the charger to enter a no-load mode, where the third signal includes a feedback signal generated when the cleaning device is disconnected from the charger.

In an embodiment of the present invention, under a trigger of the second voltage adjustment signal, the output voltage of the first voltage adjustment unit is adjusted from the second output voltage to the third output voltage. In the present solution, when the cleaning device does not need to be charged, a voltage of the charger is adjusted in time by signal communication to reduce the power consumption of the charger.

In an embodiment of the present invention, in the standby mode of the charger, the first controller continuously receives function wake-up instructions; and upon receiving any of the function wake-up instructions, the first controller outputs a third voltage adjustment signal to the first voltage adjustment unit, where the first voltage adjustment unit increases the output voltage after receiving the third voltage adjustment signal, and the increased output voltage is greater than the first output voltage and less than or equal to the second output voltage. In the present solution, in the standby state, the charger still maintains a voltage required for awakening a cleaning system function, so as to ensure that the cleaning system can be activated in time.

In an embodiment of the present invention, the function wake-up instruction is a trigger signal for the cleaning device to enter a cleaning mode; and the function wake-up instruction is a function signal of the cleaning device, which is used to initiate multiple functions of the cleaning device. In the present solution, in the standby state, the charger still maintains a voltage required for awakening a cleaning system function to ensure that the cleaning system can be activated in time.

In an embodiment of the present invention, the charging base station includes an alternating current/direct current conversion module, configured to convert an alternating current connected to the charger into a direct current; the charging base station includes a constant current/constant voltage control module, configured to switch an output of the charger to a constant current mode or a constant voltage mode. During the charging process, the present solution has multiple charging solutions to improve charging efficiency.

The present invention provides a cleaning system, including:

the charging base station as described above in any one of the embodiments; and
a cleaning device, connected to the charging base station and configured to send a variety of control signals to the charging base station.

In an embodiment of the present invention, the cleaning device is configured to feed back a signal to the first controller to establish handshake communication when triggered by a voltage signal of the charger.

In an embodiment of the present invention, the cleaning device includes a second controller, a second voltage adjustment unit and a battery pack that are electrically connected in sequence, and the second voltage adjustment unit is configured to control an output voltage of the battery pack; when the charger is in full contact with a charging port of the cleaning device, the second controller establishes a communication connection with the first controller and feeds back a first signal to the first controller.

In an embodiment of the present invention, the cleaning device is configured to enter a standby state after being fully charged, and a voltage maintained by an internal circuit of the cleaning device in the standby state is less than a preset working voltage of the cleaning device; when the cleaning system as a whole is in a standby state, an overall standby power consumption thereof is less than or equal to 0.5W.

In an embodiment of the present invention, after the battery pack is fully charged, the second controller feeds back a second signal to the first controller; and when the cleaning device is ready to be disconnected from the charger, the second controller feeds back a third signal to the first controller.

In an embodiment of the present invention, a trigger mode of the third signal includes a communication link disconnection trigger, a passive switch trigger, a wireless charging induction intensity weakening trigger, an active switch trigger, and an active handle induction trigger;

in a communication link disconnection trigger mode, the charging base station and the cleaning device are provided with corresponding matching communication terminals respectively, and a disconnection of a communication link therebetween triggers an output of the third signal;

in a passive switch trigger mode, the charging base station is provided with a micro switch associated with an output state of the charger, a state change of the micro switch is actuated during an operation process of detaching the cleaning device from the charging base station, thereby triggering the third signal;

in an active switch trigger mode, the charging base station is provided with a switching button associated with an output state of the charger, and after the cleaning device is placed on the charging base station, the output of the third signal is triggered by operating the switching button;

in a wireless charging induction intensity weakening trigger mode, the charging base station and the cleaning device are provided with matching wireless charging components respectively, and when an wireless induction intensity therebetween is less than a preset threshold, the output of the third signal is triggered;

in an active handle induction trigger mode, a touch/infrared induction switch associated with an output state of the charger is provided on a handle of the cleaning device; and when a user grasps the handle with hand, the touch/infrared induction switch is triggered, thereby triggering the output of the third signal.

In an embodiment of the present invention, the cleaning device is a floor cleaning device.

The present invention provides a charger for a cleaning device installed in the charging base station as described above, including:

a single-chip microcomputer adjustment module, configured to process a collected electrical signal and feed it back to the first controller, and configured to adjust an output voltage and an output current of the charger;

a communication module, configured to determine and feed whether the charger is in a communication connection with the cleaning device back a first signal to the first controller;

a constant current/voltage control module, configured to switch the charger to a constant current mode or a constant voltage mode; and

a first controller, configured to collect information fed back by the single-chip microcomputer adjustment module, the constant current/voltage control module and the communication module; control the single-chip microcomputer adjustment module, the constant current/voltage control module and the communication module; and before a stable electrical connection between the cleaning device and the charger is established or broken, control the single-chip microcomputer adjustment module to lower a voltage of the charger.

In an embodiment of the present invention, the single-chip microcomputer adjustment module includes a processor and a memory; where the memory is pre-stored with setting data, the processor is configured to compare the collected electrical signal with the setting data in the memory, and feed back a comparison result to the first controller to maintain the voltage of the charger at a standby voltage or a preset working voltage.

In an embodiment of the present invention, the electrical signal collected by the single-chip microcomputer adjustment module includes the output voltage and the output current of the charger; when an object to be charged is in a communication connection with the charger, the increasing of the output voltage and the output current of the charger is a process of step-by-step increase.

The present invention provides a charging method for a cleaning system, and based on the charging base station as described above, the charging method includes the following steps:

before a stable electrical connection is established between the cleaning device and the charger, maintaining a voltage of the charger at a standby voltage;

after the stable electrical connection between the cleaning device and the charger is established, increasing a voltage of the charger to the preset working voltage, and then charging the cleaning device by the charger until the charger enters the standby state. When the cleaning device is disconnected from the charger, the charger will automatically reduce its own output voltage and reduce a no-load voltage amplitude. Hence, when the two are connected in communication, the sparking risk at the moment of contact can be effectively prevented due to the low output voltage value of the charger when initially connected.

In an embodiment of the present invention, the step of increasing the voltage of the charger includes:

when the cleaning device is connected to the charging base station, determining whether a communication connection has been successfully established between the cleaning device and the charger;

if the communication connection has been successfully established between the cleaning device and the charger, receiving, by the first controller, a first signal; outputting, by the first controller, a first voltage adjustment signal to a first voltage adjustment unit; and increasing, by the first voltage adjustment unit, a voltage of the charger to the preset working voltage; and

if the communication connection between the cleaning device and the charger has not been successfully established, maintaining the voltage of the charger at the standby voltage. The present solution can reduce a power consumption of the charger and ensure that no sparks occur when the charger outputs the voltage.

In an embodiment of the present invention, the charging method comprises the following steps:

when the cleaning device is fully charged, feeding back, by the cleaning device, a second signal to the first controller;

when the cleaning device is ready to be detached from the charging base station, feeding back, by the cleaning device, a third signal to the first controller;

when the first controller receives the second signal or the third signal, the charger stopping charging and entering the standby state;

in the standby state, maintaining the voltage of the charger at the standby voltage, the standby voltage being lower than the preset working voltage.

In an embodiment of the present invention, a trigger priority of the third signal is higher than a trigger priority of the first signal and the second signal; and the trigger priority of the second signal is higher than the trigger priority of the first signal.

The present invention provides a standby method for a cleaning system, and based on the charging base station as described above, the method includes:

when the charger is in the standby state, maintaining the charger at the standby voltage, the standby voltage being greater than or equal to a minimum voltage required to wake up various functions of the cleaning system; and

when the charger receives a function wake-up instruction, releasing the standby state, increasing a voltage of the charger to the preset working voltage and performing a corresponding function wake-up instruction. While maintaining a low power consumption, the present solution can ensure the normal implementation of multiple functions of the cleaning system.

In an embodiment of the present invention, the function wake-up instruction includes a self-cleaning function wake-up instruction, a charging wake-up instruction, a hot air drying function wake-up instruction and a reservation function wake-up instruction, where the multiple function wake-up instructions respectively have the corresponding preset working voltages; and where the cleaning device is a floor scrubber or a sweeping robot.

In an embodiment of the present invention, when the cleaning system completes executing a function corresponding to the function wake-up instruction, a third voltage adjustment signal is generated and fed back to the charger;

when the charger receives the third voltage adjustment signal, the charger returns to the standby state and maintains the standby voltage.

In one or more embodiments, the first voltage adjustment unit may exist in the form of a power board, and the first controller may exist in the form of an MCU;

(1) when the charger is connected to an external AC power and no cleaning device is placed on the base station, an output voltage of the charger is 9V, and the MCU and the power board are in a dormant mode;

(2) after the charging base station receives a communication from the cleaning device, the MCU is awakened from a low power consumption state to determine whether a received instruction is correct;

if the instruction is correct, the output voltage of the power board is adjusted from 9V to 28.5V, and the instruction of the second controller of the cleaning device is replied; if the instruction is incorrect, the output voltage of the power board is maintained at 9V and the power board and MCU enter in a dormant mode;

(3) the charging base station has the functions of charging/drying/self-cleaning and the like, and when it is in normal actions such as charging/drying/self-cleaning, it determines whether a "dormant instruction" or "no instruction received for several consecutive times" is received;

if yes, the output voltage is adjusted to 9V and the voltage MCU enters the dormant mode; if no, a working mode is maintained.

The second controller of the cleaning device is in the form of a control board.

When the device body of the cleaning device is turned off and not placed on the base station, the control board is not powered and does not work; when the device body of the cleaning device is placed on the charging base station, a 9V voltage is output from the charging base station to power the control board; after the control board is powered on to complete an initialization, a communication instruction is sent to the base station through a serial port; after the control board receives a reply instruction from the charging base station, it will determine whether the instruction is correct: if the instruction is correct, it will enter a normal workflow; if the instruction is incorrect, a handshake protocol will be sent again until multiple errors (such as 5 times) are accumulated, and then a communication timeout shutdown is executed;

when the normal actions such as charging/drying/self-cleaning are performed, it is determined whether a task is completed: if so, the device body sends a dormant instruction to the base station, or stops sending instructions; if not, the working mode is maintained.

In one or more embodiments, the charger has multiple interface terminals, including a positive charging terminal, a negative charging terminal, and a communication terminal. An interaction process between the charging base station and the cleaning device includes: the device body being powered on and sending a communication to the base station; the base station being awakened and a charging voltage being increased; the base station responding to the communication instruction of the device body; the device body receiving the instruction, completing a handshake, and working normally.

There is a set of communication protocol between the charging base station and the entire device body of the cleaning device, which verifies the sent and received data in the same way. The entire device body and the base station agree on the same verification calculation method: cumulative sum. For example, if 01, 02, 03, 04, 10 are received, the first four bits are valid data, and the fourth bit is a cumulative sum (01+02+03+04=10). If the data received by the base station are 01, 02, 03, 04, 09 (01+02+03+04 is not equal to 09), that is, the cumulative sum is wrong, this set of data is regarded as wrong data and is discarded.

With respect to the hardware, the communication between the charging base station and the entire cleaning device can be realized through a serial port single-bus or IO port high and low levels, etc. The above communication process can be realized by a simple logic device. The features of the various solutions mentioned above can be freely combined to form new solutions.

In one or more embodiments of the present invention, the present invention provides a charger, including: an alternating current/alternating current conversion module, configured to convert an AC power connected to the charger into a DC power;

a single-chip microcomputer adjustment module, configured to process a collected electrical signal and feed it back to the control module, and adjusts the output voltage and the output current of the charger;

a constant current/voltage control module, configured to switch the charger to be in a constant current mode or a constant voltage mode;

a communication module, configured to determine and feed whether the charger is in a communication connection with an object being charged back to the control module;

a control module, configured to collect information fed back by the AC/DC conversion module, the single-chip microcomputer adjustment module, the constant current/voltage control module and the communication module and control the AC/DC conversion module, the single-chip microcomputer adjustment module, the constant current/voltage control module and the communication module.

As a further improved technical solution of the present embodiment, the single-chip microcomputer adjustment module includes a processor and a memory. The memory is pre-stored with setting data, and the processor compares the collected electrical signal with the setting data in the memory and feeds back a comparison result to the control module.

As a further improved technical solution of the present embodiment, the electrical signal collected by the single-chip microcomputer adjustment module includes the output voltage and the output current of the charger.

In one or more embodiments of the present invention, the present invention provides a charging method, which is used for charging an object to be charged by the charger as described in any one of the above embodiments, where the object to be charged is a cleaning device, and the charging method includes:

determining, by the communication module, whether the charger is in a communication connection with the object to be charged;

when the communication connection between the object to be charged and the charger is broken, lowering, by the single-chip microcomputer adjustment module, the output voltage and the output current of the charger;

when the object to be charged is in the communication connection with the charger, increasing, by the single-chip microcomputer adjustment module, the output voltage and the output current of the charger.

As a further improved technical solution of the present embodiment, when the object to be charged is in the communication connection with the charger, the control module determines that the voltage setting value in the single-chip microcomputer adjustment module is a setting voltage U1, and if an output voltage of the charger is lower than the setting voltage U1, the single-chip microcomputer adjustment module increases the output voltage of the charger to the setting voltage U1.

As a further improved technical solution of the present embodiment, when the communication connection between the object to be charged and the charger is broken, the control module determines that the voltage setting values in the single-chip microcomputer adjustment module are setting voltages U2 and U3, and if an output voltage of the charger is higher than the setting voltage U2, the single-chip microcomputer adjustment module lowers the output voltage of the charger to the setting voltage U3.

As a further improved technical solution of the present embodiment, the setting voltage U3 is 40% to 60% of the setting voltage U1.

As a further improved technical solution of the present embodiment, the setting voltage U1 is a battery voltage of the charger, and the battery voltage of the charger is not less than 25V.

As a further improved technical solution of the present embodiment, when the object to be charged is in the communication connection with the charger, the increasing of the output voltage and the output current of the charger is a process of step-by-step increase.

As a further improved technical solution of the present embodiment, the communication connection is established between the object to be charged and the charger through a physical connection.

To achieve the above-mentioned purpose, in the first aspect, the present utility model provides a charging base station for a cleaning device, including a base station body and a charger. The base station body is provided with a placement portion for placing the cleaning device. The charger has multiple output voltage levels, and includes a first controller and a first voltage adjustment unit, and the first controller is electrically connected to the first voltage adjustment unit. The first voltage adjustment unit is configured to supply power to the cleaning device. The first voltage adjustment unit maintains a first output voltage when the charger is in a no-load state, and the first output voltage is less than a rated charging voltage of the charger. The present solution enables the charging base station to be in a low power consumption state when being in no-load standby mode.

In one or more embodiments, the first controller is configured to output a first voltage adjustment signal to the voltage adjustment unit under a trigger of the first signal of the cleaning device, and the voltage adjustment unit outputs a second output voltage under a trigger of the first voltage adjustment signal, and the first output voltage is less than the second output voltage. The first signal is a signal indicating a successful handshake between the charger and the cleaning device. In the present solution, the charging voltage is switched by establishment of communication between the charging base station and the cleaning device, thereby avoiding the problem of sparking upon contact.

In one or more embodiments, the cleaning device is placed in alignment on the base station body so that the charger is in full contact with the charging port of the cleaning device. The base station body is provided with a micro switch, and the micro switch is electrically connected to the first controller.

The micro switch is configured to be triggered to output a signal to the first controller after the cleaning device is placed on the base station body, the first controller is configured to output a first voltage adjustment signal to the voltage adjustment unit under a trigger of the signal output by the micro switch, and the voltage adjustment unit outputs a second output voltage under a trigger of the first voltage adjustment signal, where the first output voltage is less than the second output voltage. The present solution realizes a timely switching of the charging voltage by triggering the micro switch, avoiding the problem of sparking upon contact and having a simple structure and a low cost.

In one or more embodiments, the controller is configured to output a second voltage adjustment signal to the voltage adjustment unit under a trigger of the second signal of the cleaning device, and the voltage adjustment unit outputs a first output voltage under a trigger of the second voltage adjustment signal, where the second signal is a feedback signal generated after the cleaning device is fully charged. The present solution quickly triggers the charging base station to be standby through a full-charge feedback signal, which greatly reduces a power consumption of the charging base station occurred after the cleaning device is fully charged.

In a second aspect, the present utility model provides a charging base station for a cleaning device, including a base station body and a charger. The base station body is provided with a placement portion for placing the cleaning device. The charger has multiple output voltage levels, and the charger includes a first controller and a first voltage adjustment unit. The first controller is electrically connected to the first voltage adjustment unit, the first voltage adjustment unit is configured to supply power to the cleaning device, and the first voltage adjustment unit maintains a second output voltage when the charger is in a charging state.

The controller is configured to output a second voltage adjustment signal to the voltage adjustment unit when triggered by a second signal from the cleaning device, and the voltage adjustment unit outputs a first output voltage when triggered by the second voltage adjustment signal. The first output voltage is less than the second output voltage, and the second signal is a feedback signal generated after the cleaning device is fully charged.

In the third aspect, the present utility model provides a charging base station for a cleaning device, including a base station body and a charger. The base station body is provided with a placement portion for placing the cleaning device. The charger has multiple output voltage levels, and is configured to enter a dormant state after the cleaning device is fully charged. A no-load state and the dormant state of the charger both belong to a standby state. The charger maintains a first output voltage in the standby state and a second output voltage in a charging state. The first output voltage is less than the second output voltage.

In a fourth aspect, the present utility model provides a charging base station for a cleaning device, including a base station body and a charger. The base station body is provided with a placement position for placing the cleaning device. The charger is installed on the base station body. The charger includes a voltage output terminal, and the voltage output terminal is configured to charge the cleaning device. When being in an uncharged state, an output voltage of the voltage output terminal is a first voltage.

The charging component also includes a first voltage adjustment unit. When the cleaning device is placed on the placement position for charging, the first voltage adjustment unit is triggered by a mechanical switch when the cleaning device is placed on the placement position, or triggered by the cleaning device establishing communication with the charger; the voltage adjustment unit adjusts an output voltage of the voltage output terminal to a second voltage to charge the cleaning device; and the second voltage is greater than the first voltage.

In a fifth aspect, the present utility model provides a cleaning system, including the above-mentioned charging base station and cleaning device.

In one or more embodiments, the cleaning device is configured to feed back a signal to the first controller under a trigger of a voltage signal of the charger to establish a handshake communication.

In one or more embodiments, the cleaning device includes a second controller, a second voltage adjustment unit and a battery pack that are electrically connected in sequence; and the second voltage adjustment unit is configured to control an output voltage of the battery pack. When the charger is in full contact with a charging port of the cleaning device, the second controller establishes a communication connection with the first controller.

In one or more embodiments, the cleaning device is configured to enter a standby state after being fully charged, and a voltage maintained by an internal circuit of the cleaning device in the standby state is less than a rated working voltage thereof.

It should be noted that the forms in which the above first controller and second controller are triggered include but are not limited to an electronic switch trigger form and a mechanical switch trigger form. Accordingly, the forms in which the above signals for voltage switching are generated include but are not limited to an electronic switch trigger and a mechanical switch trigger.

In one or more embodiments, the first voltage adjustment unit may exist in the form of a power board, and the first controller may exist in the form of an MCU;

(1) when the charger is connected to an external AC power and no cleaning device is placed on the base station, an output voltage of the charger is 9V, and the MCU and the power board are in a dormant mode;

(2) after the charging base station receives a communication from the cleaning device, the MCU is awakened from a low power consumption state to determine whether a received instruction is correct;

if the instruction is correct, the output voltage of the power board is adjusted from 9V to 28.5V, and the instruction of the second controller of the cleaning device is replied; if the instruction is incorrect, the output voltage at 9V and the dormant mode are maintained;

(3) the charging base station has the functions of charging/drying/self-cleaning and the like, and when it is in normal actions such as charging/drying/self-cleaning, it determines whether a "dormant instruction" or "no instruction received for several consecutive times" is received:

if yes, the output voltage is adjusted to 9V and the MCU enters the dormant mode; if no, a working mode is maintained.

The second controller of the cleaning device is in the form of a control board.

When the device body of the cleaning device is turned off and not placed on the base station, the control board is not powered and does not work; when the device body of the cleaning device is placed on the charging base station, a 9V voltage is output from the charging base station to power the control board; after the control board is powered on to complete an initialization, a communication instruction is sent to the base station through a serial port. After the control board receives a reply instruction from the charging base station, it will determine whether the instruction is correct: if the instruction is correct, it will enter a normal workflow; if the instruction is incorrect, a handshake protocol will be sent again until multiple errors (such as 5 times) are accumulated, and then a communication timeout shutdown is executed; when the normal actions such as charging/drying/self-cleaning are performed, it is determined whether a task is completed: if so, the device body sends a dormant instruction to the base station, or stops sending instructions; if not, the working mode is maintained.

In one or more embodiments, the charger has multiple interface terminals, including a positive charging terminal, a negative charging terminal, and a communication terminal. An interaction process between the charging base station and the cleaning device includes: the device body being powered on and sending a communication to the base station; the base station being awakened and a charging voltage being increased; the base station responding to the communication instruction of the device body; the device body receiving the instruction, completing a handshake, and working normally.

There is a set of communication protocol between the charging base station and the entire device body of the cleaning device, which verifies the sent and received data in the same way. The entire device body and the base station agree on the same verification calculation method: cumulative sum. For example, if 01, 02, 03, 04, 10 are received, the first four bits are valid data, and the fourth bit is a cumulative sum (01+02+03+04=10). If the data received by the base station are 01, 02, 03, 04, 09 (01+02+03+04 is not equal to 09), that is, the cumulative sum is wrong, this set of data is regarded as wrong data and is discarded.

With respect to the hardware, the communication between the charging base station and the entire cleaning device can be realized through a serial port single-bus or IO port high and low levels, etc. The above communication process can be realized by a simple logic device. The features of the various solutions mentioned above can be freely combined to form new solutions.

As described above, the cleaning system and charging base station provided by the present invention can be applied to floor cleaning device, such as floor scrubbers, vacuum cleaners, and sweepers. By using the cleaning system and charging base station provided by the present invention, it is not only possible to avoid sparking when the device body of the cleaning device is connected during the charging of the cleaning device, but also to reduce a power consumption of the charging base station and the cleaning device. Specifically, when the circuit does not change, the equivalent resistance of the system is constant, so the power consumption at this time depends on the change in voltage. When an output voltage is reduced to, for example, 1/3 of an original output voltage, the power consumption becomes 1/9 of the original power consumption, so that the power consumption reduction effect is significant. Besides, the cleaning system and charging base station provided by the present invention achieve the above technical effects at a relatively low cost. In addition, the signal sending and receiving in the working process can be judged, enabled and shut down only through simple logic elements, with high control efficiency and low error probability. The cleaning system and charging base station of the present invention automatically adjust an output voltage and an output current of the charger. When an object to be charged is disconnected from the charger, the charger will reduce its own output voltage and reduce a no-load voltage amplitude. At this time, when the object to be charged is in the communication connection with the charger, the charger has a low output voltage value when initially connected, which can effectively prevent the sparking risk at the moment of contact. When the two establish communication, the output voltage and the output current of the charger will then rise to normal charging voltage and charging current values, and the object to be charged will begin to be charged. The present invention reduces the no-load voltage, and since the voltage is relatively low at the moment of contact, contact sparking can be avoided, thereby reducing the risk of damage to the internal components of the object to be charged.

Of course, it is not necessary for any product of the present invention to meet all the above advantages at the same time for implementation.

## BRIEF DESCRIPTION OF DRAWINGS

In order to more clearly illustrate the technical solutions of the embodiments of the present invention, the accompanying drawings required for describing the embodiments will be briefly introduced below. Obviously, the accompanying drawings described below are only some embodiments of the present invention. For those skilled in this field, other accompanying drawings can be obtained based on these accompanying drawings without paying creative work.

FIG. 1 is an overall structural diagram of a cleaning system according to an embodiment of the present invention.
FIG. 2 is a physical structural diagram of a cleaning system according to an embodiment of the present invention.

FIG. 3 is an overall structural diagram of a first voltage adjustment unit according to an embodiment of the present invention.

FIG. 4 is a connection diagram of an adjustment switch according to further embodiment of the present invention.

FIG. 5 is a connection diagram of an adjustment switch according to yet further embodiment of the present invention.

FIG. 6 is a schematic diagram of module control of a cleaning system according to a specific embodiment of the present invention.

FIG. 7 is a flow chart of a charging method for a cleaning system according to a specific embodiment of the present invention.

FIG. 8 is a flow chart of a charging method for a cleaning system according to a specific embodiment of the present invention.

FIG. 9 is a flow chart of a charging method for a cleaning system according to a specific embodiment of the present invention.

In the figures: 100, charging base station; 110, base station body; 111, placement portion; 120, charger; 121, first controller; 122, first voltage adjustment unit; 200, cleaning device; 210, second controller; 220, second voltage adjustment unit; 230, battery pack.

## DESCRIPTION OF EMBODIMENTS

The technical solutions in embodiments of the present invention will be described clearly and completely hereinafter, with reference to drawings of the embodiments of the present invention. Obviously, the described embodiments are only part of the embodiments of the present invention, not all of the embodiments. Based on the embodiments of the present invention, all other embodiments obtained by those skilled in the art without creative work shall fall into the scope of protection of the present invention.

Unless explicitly stated otherwise, throughout the specification and claims, the term "comprise" or its variations such as "include" or "comprising", will be understood to include the stated elements or components but not to exclude other elements or components.

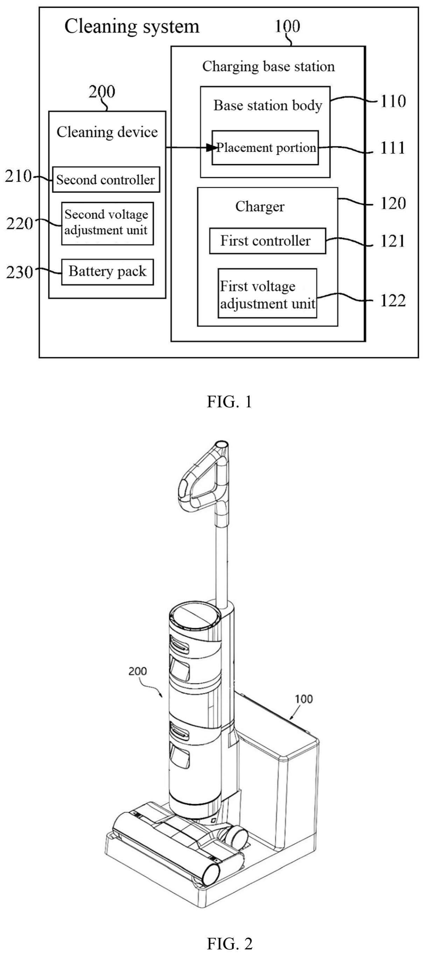

Please refer to FIG. 1 and FIG. 2, the present invention provides a charging base station. The charging base station 100 includes a base station body 110 and a charger 120. The base station body 110 is provided with a placement portion 111 for placing a cleaning device 200. The cleaning device may be a floor self-cleaning device, such as a scrubber and a vacuum cleaner. The charger 120 has multiple output voltage levels. Specifically, the charger 120 is connected to a household power supply, and the charger 120 outputs a first output voltage or a second output voltage to the cleaning device 200 after performing voltage conversion on the household power supply. The first output voltage is less than a rated charging voltage of the charger 120, and the second output voltage can be set to the rated charging voltage. A voltage value of the first output voltage is less than that of the second output voltage, and specifically, the first output voltage is, for example, 1/3 of the second output voltage. For example, the first output voltage ranges 7V to 15V, and the second output voltage is related to the battery number of an entire cleaning device. The second output voltage in the present invention is, for example, 24V to 30V, 28V to 34V, 32V to 36V, and the like. In some embodiments of the present invention, the first output voltage is 10% to 50% of the second output voltage. The specific values of the first output voltage and the second output voltage are not limited in the present invention. In order to meet a relevant standard for a standby power consumption (e.g., requirement of less than 0.5W), it is necessary to redesign the first output voltage according to a base station configuration to satisfy a corresponding standard. Specifically, in a standby state, a power consumption of the charging base station 100 or the charger 120 is less than or equal to 0.5W. When the charger 120 outputs the first output voltage, the charger 120 is in a low power consumption state, and the charger 120 does not charge the cleaning device 200 at this time. When the charger 120 outputs the first output voltage, the cleaning device 300 is in a fully-charged standby state or a to-be-charged standby state. When the charger 120 outputs the second output voltage, the charger 120 charges the cleaning device 200. When the cleaning device 200 is fully charged, the charger 120 converts from outputting the second output voltage to outputting the first output voltage. The cleaning device includes but is not limited to a scrubber, and the above standby state includes but is not limited to a networked standby state.

Referring to FIG. 1 to FIG. 3, the charger 120 includes a first controller 121 and a first voltage adjustment unit 122. The first controller 121 is electrically connected to the first voltage adjustment unit 122, and the first voltage adjustment unit 122 is used to supply power to the cleaning device 200. The first voltage adjustment unit 122 can charge the cleaning device 200 through a wired charging and/or a wireless charging mode. In a wired charging mode, the charging base station 100 and the cleaning device 200 are respectively provided with matching charging terminals and matching communication terminals to achieve a wired charging and a wired communication therebetween. In a wireless charging mode, the charging base station 100 and the cleaning device 200 are respectively provided with matching wireless charging components and matching wireless communication components to achieve a wireless charging and a wireless communication therebetween. In the present invention, a default voltage of the charger 120 is the first output voltage.

Specifically, a standby voltage is referred to as the first output voltage, and a preset working voltage is referred to as the second output voltage. When the charger 120 is in a no-load mode, the first voltage adjustment unit 122 maintains the first output voltage. In the present invention, the charger 120 is electrically connected to the cleaning device 200 in contact. Specifically, the cleaning device 200 and the charger 120 can be electrically connected with each other by means of a PIN pin and a serial port and other way, so as to form a charging current path and a signal communication transmission path between the cleaning device 200 and the charger 120. In the present invention, the cleaning device 200 is a signal transmitting device, and the charger 120 is a signal receiving device. The no-load mode of the charger 120 refers to a state when the charger 120 is not connected to the cleaning device 200. When the cleaning device 200 is separated from the base station body 110, the charger 120 is switched to the no-load mode. Specifically, the cleaning device 200 sends a first signal or a second signal, and the first controller 121 receives the first signal and the second signal. Under a trigger of the first signal, the first controller 121 outputs a first voltage adjustment signal to a first voltage adjustment unit, and the first voltage adjustment unit outputs a second output voltage under a trigger of the first voltage adjustment signal, and the second output voltage is greater than the second output voltage. In the present invention, the first signal is a trigger signal for the charger 120 to enter a charging state, and a signal indicating that a handshake has been successfully executed between the charger 120 and the cleaning device 200. It should be noted that when the charger 120 receives the first signal triggered by the cleaning device 200 or actively triggered by a user, the charger 120 enters the charging state, and an output voltage of the charger 120 is switched from a standby voltage to a preset working voltage. In one or more embodiments, the first voltage adjustment unit 122 may exist in the form of a power board, and the first controller 121 may exist in the form of a MCU.

In an embodiment of the present invention, a communication connection between the charger 120 and the cleaning device 200 and a control operation of the cleaning device 200 include steps S1 to S3.

S1, when the charger 120 is connected to an external AC power and the cleaning device 200 is not placed on the charging base station, an output voltage of the charger 120 is 9V, and the MCU and the power board are in a dormant mode; and when the cleaning device 200 is fully charged on the charging base station 100, the charger 120 is switched to a dormant mode, where the dormant mode is a state where the charging base station 100 is connected to the cleaning device 200 and is not in operation.

S2, after the charging base station 100 receives a communication from the cleaning device 200, the MCU is awakened from a low power consumption state and determines whether the received instruction is correct; if the instruction is correct, an output voltage of the power board is adjusted from 9V to 28.5V, and the instruction from a second controller of the cleaning device 200 is replied; if the instruction is incorrect, the voltage at 9V and the dormant mode are maintained.

S3, the charging base station 100 has functions such as charging/drying/self-cleaning, and when it is in a normal charging/drying/self-cleaning action and the like, it determines whether a "dormant instruction" or "no instruction received for several consecutive times" is received: if yes, the output voltage is adjusted to 9V, and the voltage MCU enters the dormant mode; if no, a working mode is maintained.

In the present invention, if a device body is turned off and not placed on the base station, a control board will not be powered and will not work at this time. When the device body is placed on the charging base station, and a 9V voltage of the charging base station is output to the control board for power supply. After the control board is powered on to complete an initialization, a communication instruction is sent to the base station through a serial port. After the control board receives a reply instruction from the charging base station, it will determine whether the instruction is correct; if the instruction is correct, it will enter a normal workflow; if the instruction is incorrect, a handshake protocol will be sent again until multiple errors (such as 5 times) are accumulated, and then a communication timeout shutdown is executed. When the normal actions such as charging/drying/self-cleaning are performed, it is determined whether a task is completed: if so, the device body sends a dormant instruction to the base station, or stops sending instructions; if not, the working mode continues to be maintained. The normal actions such as charging/drying/self-cleaning are part of the functions of the cleaning device 200. When the functions of the cleaning device 200 other than the charging function are executed, a second controller 210 forms a function wake-up instruction and operates each component in the cleaning device 200 through the function wake-up instruction. When the second controller 210 sends the function wake-up instruction, if the charger 120 is in the standby mode, the first controller 121 sends a voltage adjustment signal to the first voltage adjustment unit 122, and the first voltage adjustment unit 122 increases the output voltage, and the increased output voltage is greater than the first output voltage and less than or equal to the second output voltage.

In one or more embodiments of the present invention, the charger 120 has multiple interface terminals, including a positive charging terminal, a negative charging terminal, and a communication terminal. An interaction process between the charging base station and the cleaning device includes: the device body being powered on and sending a communication to the base station; the base station being awakened and a charging voltage being increased; the base station responding to the communication instruction of the device body; the device body receiving the instruction, completing a handshake, and working normally.

In one or more embodiments of the present invention, the communication between the charging base station 100 and the entire cleaning device 200, with respect to the hardware, can be realized through a serial port single-bus or IO port high and low levels, etc. to achieve the interaction described above. The above-mentioned communication process can be realized using simple logic device. The features of the various solutions mentioned above can be freely combined to form new solutions.

In one or more embodiments of the present invention, there is a set of communication protocol between the charging base station 100 and the entire device body of the cleaning device 200. This protocol will verify transmitted and received data using the same method, whereby both the entire device and the base station agree on the same verification calculation method: cumulative sum. For example, if 01, 02, 03, 04, 10 are received, the first four bits are valid data, and the fourth bit is a cumulative sum (01+02+03+04=10). If the data received by the base station are 01, 02, 03, 04, 09 (01+02+03+04 is not equal to 09), that is, the cumulative sum is wrong, this set of data is regarded as wrong data and is discarded.

Please refer to FIG. 1 to FIG. 3, in the present invention, there is a preset communication protocol between the cleaning device 200 and the charger 120. The cleaning device 200 sends multiple signals to the charger 120 through the serial port, and each signal carries verification information of the protocol at the same time. When the verification information is correct, the corresponding communication signal is the first signal or the second signal, and the charger 120 successfully completes the handshake with the cleaning device 200. In the present invention, the accuracy of the verification information can be determined by the cumulative sum data of the verification information. In the present invention, the cleaning device 200 and the first controller 121 will verify the transmitted and received data in the same way, and the same verification calculation method is preset in the cleaning device 200 and the first controller 121. For example, the data verification is performed using cumulative sum. For example, a data sequence sent by the cleaning device 200 is 01, 02, 03, 04, 10, the first four bits in the data sequence are valid data, and the fifth bit is the cumulative sum 10 of the first four bits of data. If the data received by the charger 120 are 01, 02, 03, 04, 09, then the cumulative sum of the charger 120 is 09, that is, the cumulative sum is wrong, and this set of data sequence is regarded as erroneous data. At this time, the charger 120 ignores the signal sent by the cleaning device 200. The accuracy of signal transmission is improved by information verification, and this verification process can be implemented by an accumulator and a comparator. Specifically, the accumulator accumulates the data sequence to obtain a sum; and the comparator compares the cumulative sum data in the cleaning device 200 with the cumulative sum data in the first controller 121. If the cumulative sum data are the same, the first signal is sent to the first voltage adjustment unit 122. If the cumulative sum data are the same, the data and signal information are deleted. The present invention does not limit the verification method of the cumulative sum. In multiple embodiments of the present invention, the verification method of the communication protocol can also be adjusted by CRC verification and other methods.

Please refer to FIG. 1 to FIG. 3, in the present invention, the cleaning device 200 is placed in alignment on the base station body 110 so that the charger 120 is in full contact with the charging port of the cleaning device 200. In the present invention, a micro switch is provided on the base station body 110, and the micro switch is electrically connected to the first controller 121. In the present embodiment, when the cleaning device 200 initially contacts the placement portion, the charger 120 and the cleaning device 200 enter a preparatory process of establishing a stable electrical connection, and the charger 120 is ready to receive the first signal. When the cleaning device 200 is placed in alignment on the placement portion to complete the stable electrical connection between the cleaning device 200 and the charger 120, the communication handshake therebetween is thus successfully realized, and at this time, the charger 120 receives the first signal sent by the cleaning device 200. After the cleaning device 200 is placed on the base station body 110, and specifically located on the placement portion 111, the micro switch triggers an output signal to the first controller 121. Under a trigger of a micro switch output signal, the first controller 121 outputs a first voltage adjustment signal to the first voltage adjustment unit 122, and the first voltage adjustment unit 122 outputs a second output voltage under a trigger of the first voltage adjustment signal. The first output voltage is less than the second output voltage. In addition, under a trigger of a second signal or a third signal of the cleaning device 200, the first controller 121 outputs a second voltage adjustment signal to the first voltage adjustment unit 122, and the first voltage adjustment unit 122 is adjusted from outputting the second output voltage to outputting the first output voltage under a trigger of the second voltage adjustment signal. The second signal is a feedback signal generated after the cleaning device 200 is fully charged. The third signal is a trigger signal for the charger to enter the no-load mode, and the third signal is a feedback signal generated when the cleaning device is disconnected from the charger. Specifically, after a battery pack 230 is fully charged, the second controller 210 feeds back the second signal to the first controller 121, and when the cleaning device 200 is ready to be disconnected from the charger 120, the second controller 210 feeds back the third signal to the first controller 121.

It should be noted that a trigger priority of the third signal is higher than those of the first signal and the second signal. The trigger priority of the second signal is higher than that of the first signal. When the cleaning device 200 is fully charged, the cleaning device 200 feeds back the second signal to the first controller 121. When the cleaning device is ready to be detached from the charging base station 100, the cleaning device 200 feeds back the third signal to the first controller 121. When the first controller 121 receives the second signal or the third signal, the charger 120 stops charging and enters a standby state. In the standby state, a voltage of the charger 120 is maintained at a standby voltage, and the standby voltage is less than a preset working voltage. The trigger modes of the third signal include a communication link disconnection trigger, a passive switch trigger, a wireless charging induction intensity weakening trigger, an active switch trigger and an active handle induction trigger.

It should be noted that, in the process of establishing a stable electrical connection between the cleaning device 200 and the charger 120, the output voltage of the first voltage adjustment unit 122 is a first output voltage, and the first output voltage is capable of activating a control circuit of the cleaning device 200 so that the cleaning device 200 can feedback a signal to the charger 120. In the charging state, the output voltage of the first voltage adjustment unit 122 is a second output voltage. When the charger 120 is in the dormant mode or the no-load mode, the output voltage of the first voltage adjustment unit 122 is the first output voltage, and the second output voltage is within a safe fluctuation range of a rated charging voltage of the charger 120.

It should be noted that in one or more embodiments of the present invention, in the process of establishing a stable electrical connection between the cleaning device 200 and the charger 120, the output voltage of the first voltage adjustment unit 122 is a third output voltage. In the charging state, the output voltage of the first voltage adjustment unit 122 is a second output voltage. When the charger 120 is in the dormant mode or the no-load mode, the output voltage of the first voltage adjustment unit 122 is the third output voltage. The second output voltage is greater than or equal to a rated charging voltage of the charger 120, and the first output voltage and the third output voltage are both less than the rated charging voltage of the charger 120. The present solution adjusts the output voltage of the charger 120 in different modes, resulting in a lower power consumption while satisfying the functional requirements, and low risk of sparking. The third output voltage is less than or equal to the first output voltage, and in some embodiments, the third output voltage is equal to the first output voltage to reduce the complexity of voltage adjustment and improve the control efficiency of the device. In some embodiments, the third output voltage is less than the first output voltage to reduce a standby power consumption of the device, which avoids sparking and at the same time enables a rapid adjustment to the second output voltage for charging the cleaning device 200.

Please refer to FIG. 1, in an embodiment of the present utility model, in a communication link disconnection trigger mode, the charging base station and the cleaning device 200 are respectively provided with corresponding matching communication terminals, and a disconnection of a communication link therebetween triggers an output of the third signal. In a passive switch trigger mode, the charging base station is provided with a micro switch associated with an output state of the charger 120, and the operation process of the cleaning device 200 being separated from the charging base station 100 leads to a state change of the micro switch, thereby triggering the third signal. It should be noted that the above-mentioned micro switch can be one or more. In an embodiment of the present invention, when there is one micro switch, the micro switch is in a normally open state. When the cleaning device 200 is connected to the charging base station 100, the normally open micro switch is closed under pressure, thereby forming a physical closed circuit and triggering a formation of the first signal. When the cleaning device 200 is separated from the charging base station 100, the micro switch returns to an open state due to the removal of pressure, and the physical closed circuit becomes open, thereby triggering a formation of the third signal. In another embodiment of the present invention, there can be multiple micro switches, among which some micro switches are in a normally open state and some micro switches are in a normally closed state. Both the normally open micro switch and the normally closed micro switch are pressure-controlled, and the normally open micro switch and the normally closed micro switch are respectively connected to a circuit that triggers the first signal and a circuit that triggers the third signal. When the cleaning device 200 is connected to the charging base station 100, the normally open micro switch is closed under pressure, thereby forming a physical closed circuit and triggering a formation of the first signal; and the normally closed micro switch is opened due to pressure. When the cleaning device 200 is detached from the charging base station 100, the normally closed micro switch returns to a closed state due to the removal of pressure, forming a physical closed circuit, thereby triggering a formation of the third signal. In the present embodiment, the formation of both the first signal and the third signal is triggered by a closure action of a micro switch. The difference lies in that: a closure of the normally open micro switch triggers the formation of the first signal, while a closure of the normally closed micro switch triggers the formation of the third signal. It should be noted that the formation of the first signal and the third signal corresponds to an instant of closure or break of a micro switch, rather than with the normally open state or the normally closed state of the micro switch. Specifically, a voltage pulse fluctuation corresponding to the instant of closure or break of the micro switch can be used as a condition for triggering the first signal or the third signal. In other embodiments of the present invention, the number of micro switches can also be adjusted, or the break of different micro switches can be used as the trigger condition of the first signal and the third signal.

Please refer to FIG. 1, in an embodiment of the present utility model, the communication link disconnection trigger mode may be an active switch trigger mode. The charging base station is provided with a switching button associated with an output state of the charger 120. After the cleaning device 200 is placed on the charging base station, by operating the switching button, a third signal is triggered to be output. It should be noted that in the implementation of this switching button, an operation of pressing the button may be an active operation or a passive operation. The active operation on the button may be performed by a user pressing on the button in a contact manner or pressing on the button in a remote control manner. The passive operation on the button, for example, can be implemented by designing the button to be arranged in an exit path of the cleaning device 200, and when the cleaning device 200 is detached, the exit path passes through the button, thereby triggering a formation of the third signal.

Please refer to FIG. 1. In an embodiment of the present utility model, the communication link disconnection trigger mode can be a wireless charging induction intensity weakening trigger mode. The charging base station and the cleaning device 200 are respectively provided with matching wireless charging components; and when a wireless induction intensity therebetween is less than a preset threshold, the third signal is triggered to be output. It should be noted that the wireless induction intensity can be passively adjusted or actively adjusted. When the cleaning device 200 is detached, since a distance between the cleaning device 200 and a charging position increases, the wireless induction intensity automatically weakens until the wireless induction intensity is lower than the preset threshold, so that the first controller 121 forms the third signal and sends it to the first voltage adjustment unit 122, thereby forming a second voltage adjustment signal. The wireless induction intensity can also be weakened through remote settings via networking, which is not limited thereto.

Please refer to FIG. 1. In an embodiment of the present utility model, the communication link disconnection trigger mode may be an active handle induction trigger mode. A handle of the cleaning device 200 is provided with a touch/infrared induction switch associated with an output state of the charger 120. When a user grasps the handle with hand, the touch/infrared induction switch is triggered, thereby triggering an output of the third signal. It should be noted that the present invention does not limit an induction triggering position to be set on the handle, which may also be set on the charging base station 100. In other embodiments of the present invention, a pressure sensing device may also be provided on the charging base station 100. When the cleaning device 200 is detached, the third signal is triggered through a perception of a pressure change. Specifically, when a pressure measurement value is lower than a threshold, the third signal is triggered. In other embodiments of the present invention, a device for sensing a position of the cleaning device 200 may also be provided on the charging base station 100, for example, an optical coupler is provided for sensing. When the optical coupler senses that the cleaning device 200 is not in a charging position, the third signal is triggered. The above method is not only applied in the form of triggering the third signal when the communication link is disconnected, but may also be used in the form of triggering the first signal when the communication link is established. In the present invention, the trigger of the first signal and the third signal is not limited to a wired mode, but may also be a wireless mode. In addition, the wireless mode is not limited to an induction control, it can also be controlled through wireless network.

It should be noted that the cleaning device 200 is separated from the charging base station 100 before being fully charged during the charging process, and the third signal triggered at this time can not only enable the charging base station 100 to quickly return to the standby voltage to reduce subsequent power consumption, but also can significantly reduce the sparking risk occurred during a separation process therebetween by reducing an output voltage of the charger 120 before they are about to separate.

In the present invention, when the charger 120 is in the standby state, the charger 120 maintains a standby voltage, and the standby voltage is greater than or equal to a minimum voltage required to wake up various functions of the cleaning system; when the charger 120 receives a function wake-up instruction, the standby state is released, and the charger 120 increases a voltage to a preset working voltage and executes a corresponding function wake-up instruction. The present solution can ensure a normal implementation of multiple functions of the cleaning system while maintaining a low power consumption. The function wake-up instruction includes a self-cleaning function wake-up instruction, a charging wake-up instruction, a hot air drying function wake-up instruction, and a reservation function wake-up instruction. The multiple function wake-up instructions have corresponding preset working voltages respectively, and the cleaning device 200 is a scrubber or a sweeping robot. After the cleaning system executes the function corresponding to the function wake-up instruction, a third voltage adjustment signal is formed and fed back to the charger 120. When the charger 120 receives the third voltage adjustment signal, the charger 120 returns to the standby state and maintains the standby voltage. Specifically, in the standby state of the charger 120, if the first controller 121 receives a function wake-up instruction, the first controller 121 outputs a third voltage adjustment signal to the first voltage adjustment unit 122. The first voltage adjustment unit 122 increases the output voltage under an action of the third voltage adjustment signal, and an increased output voltage is greater than the first output voltage and less than or equal to the second output voltage. The user triggers a function wake-up instruction to be output to the first controller 121 through a button, an induction switch or a touch screen, etc. on the cleaning device 200 or the charging base station 100, so as to adjust a voltage output, thereby satisfying the voltage required for the charging base station 100 to perform various functions.

Please refer to FIG. 1 to FIG. 3. In the present invention, the first voltage adjustment unit 122 includes a power supply 1221, a voltage stabilizer AP, a pull-up resistor, a pull-down resistor and an adjustment resistor. The power supply 1221 may be a flyback switching power supply. The power supply 1221 is electrically connected to an external power supply, e.g., a household power supply at 220V. The charger 120 is provided with a positive electrode charging port CON1, a negative electrode charging port CON3 and a communication port CON2. The positive electrode charging port CON1 is electrically connected to the power supply 1221 and the battery pack 230 of the cleaning device 200, and is used as a current input terminal when the battery pack 230 is charged. The negative electrode charging port CON3 is electrically connected to the power supply 1221 and the battery pack 230, and is used as a current output terminal when the battery pack 230 is charged. Besides, the negative electrode charging port CON3 is grounded. The communication port CON2 is connected to the cleaning device 200 and is used as a communication interface with the cleaning device 200.

Please refer to FIG. 1 to FIG. 3, in the present invention, the voltage stabilizer AP includes a constant voltage port VCTRL, a voltage output port VOUT, a power supply port VCC and a ground port GND. The constant voltage port VCTRL outputs a constant voltage, which can be, for example, 2.5V. The voltage output port VOUT is electrically connected to the positive electrode charging port CON1, thereby affecting an output voltage of the power supply 1221. The power supply port VCC is electrically connected to the power supply 1221, thereby receiving the power supplied from the power supply 1221. The ground port GND is grounded.

Please refer to FIG. 1 to FIG. 3. In the present invention, the first voltage adjustment unit 122 includes a first preset resistor R22, a second preset resistor R25 and an adjustment resistor R80. One end of the first preset resistor R22 is electrically connected to the positive electrode charging port CON1, and the other end of the first preset resistor R22 is electrically connected to the second preset resistor R25. One end of the second preset resistor R25 is electrically connected to the first preset resistor R22, and the other end of the second preset resistor R25 is grounded. The adjustment resistor R80 is connected in parallel with the first preset resistor R22 or in parallel with the second preset resistor R25, or the adjustment resistor R80 is in an idle state. Specifically, one end of the adjustment resistor R80 is electrically connected to a common end of the first preset resistor R22 and the second preset resistor R25. When R80 is in an idle state, in the first voltage adjustment unit 122, the pull-up resistor is the first preset resistor R22, the pull-down resistor is the second preset resistor R25, and a reference voltage is VCTRL. At this time, the output voltage VOUT of the first voltage adjustment unit 122 is as defined in formula (1), which corresponds to the first output voltage of the first voltage adjustment unit 122.

$$VOUT = VCTRL*(R22+R25)/R25 \qquad (1).$$

Please refer to FIG. 1 to FIG. 3. In an embodiment of the present invention, one end of the adjustment resistor R80 is electrically connected to a common end of the first preset resistor R22 and the second preset resistor R25, and the other end of the adjustment resistor R80 is electrically connected to a control signal end MUC_IO. When the control signal end MUC_IO is at a high level, there is no current flowing through the adjustment resistor R80 due to the lack of potential difference between two ends of the adjustment resistor R80, which is equivalent to the adjustment resistor R80 being in an idle state. The output voltage VOUT of the first voltage adjustment unit 122 is as defined in the formula (1). When the control signal end MUC_IO is at a low level, one end of the adjustment resistor R80 is connected to the common end of the first preset resistor R22 and the second preset resistor R25, and the other end is equivalent to being grounded. At this time, the adjustment resistor R80 is connected in parallel with the second preset resistor R25, thereby reducing a resistance value of the pull-down resistor, so the output voltage VOUT of the first voltage adjustment unit 122 increases. At this time, the output voltage VOUT of the first voltage adjustment unit 122 is as defined in formula (2), which corresponds to the second output voltage of the first voltage adjustment unit 122. By adjusting the values of the first preset resistor R22, the second preset resistor R25, the adjustment resistor R80 and the reference voltage VCTRL, the specific values of the first output voltage and the second output voltage can be adjusted, which are not specifically limited thereto.

$$VOUT = 2.5*(R22+R25)/ [(R25*R80)/(R25+R80)] \qquad (2).$$

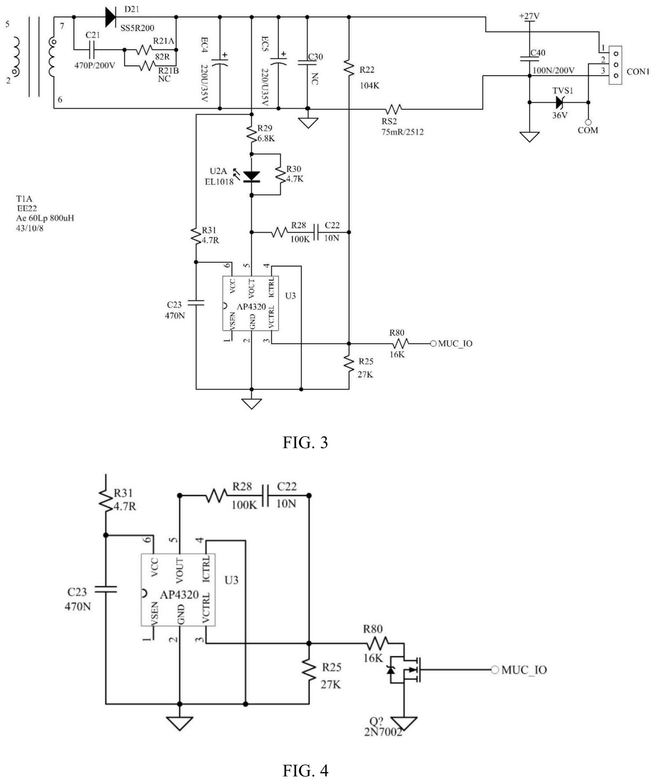

Please refer to FIG. 1 and FIG. 4. In another embodiment of the present invention, the first adjustment unit 122 includes an adjustment switch Q. One end of the adjustment resistor R80 is electrically connected to a common end of the first preset resistor R22 and the second preset resistor R25, and the other end of the adjustment resistor R80 is electrically connected to the adjustment switch Q. One end of the adjustment switch Q is electrically connected to the adjustment resistor R80, and the other end of the adjustment switch Q is grounded. The adjustment switch Q is an MOS tube or other types of switch tubes. When the adjustment switch Q is the MOS tube, the on and off of the adjustment switch Q can be regulated by applying a high level voltage or a low level voltage to the adjustment switch Q. In the present embodiment, the adjustment switch Q is, for example, a PMOS tube. When a low level voltage is applied to a driving pole of the adjustment switch Q, the adjustment switch Q is turned on. When a high level voltage is applied to the driving pole of the adjustment switch Q, the adjustment switch Q is turned off. In the present embodiment, the driving pole of the adjustment switch Q is electrically connected to the control signal terminal MUC_IO. When the control signal terminal MUC_IO inputs a high level signal, the adjustment switch Q is turned off, and the adjustment resistor R80 is equivalent to being unconnected. Therefore, at this time, an output voltage VOUT of the first voltage adjustment unit 122 is as defined in formula (1). When a low level signal is input to the control signal terminal MUC_IO, the adjustment switch Q is turned off, and the adjustment resistor R80 is connected in parallel with the second preset resistor R25, thereby reducing the resistance value of the pull-down resistor, so the output voltage VOUT of the first voltage adjustment unit 122 increases. At this time, the output voltage VOUT of the first voltage adjustment unit 122 is as defined in the formula (2).

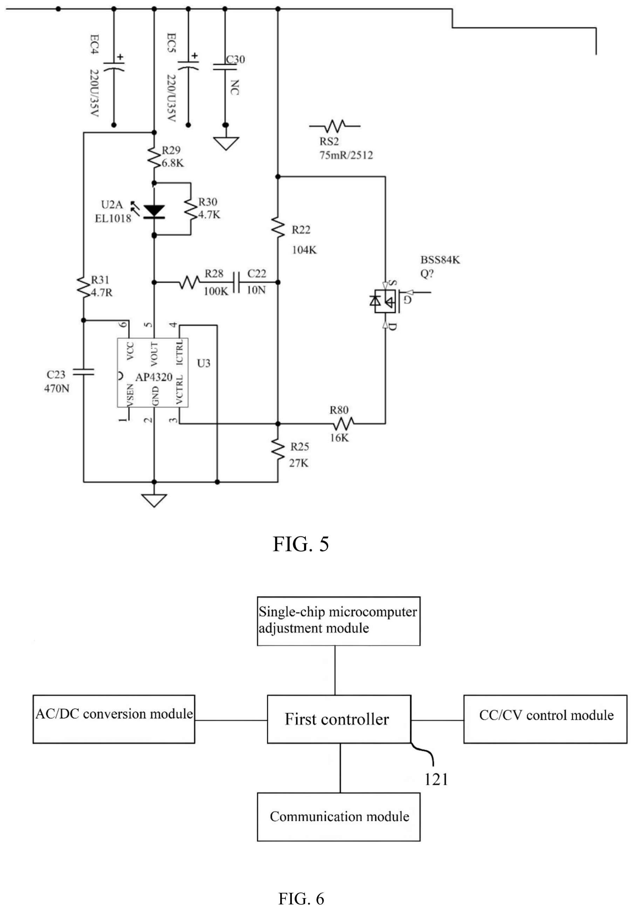

Please refer to FIG. 1 and FIG. 5. In yet another embodiment of the present invention, the first adjustment unit 122 includes an adjustment switch Q. One end of the adjustment resistor R80 is electrically connected to a common end of the first preset resistor R22 and the second preset resistor R25, and the other end of the adjustment resistor R80 is electrically connected to the adjustment switch Q. One end of the adjustment switch Q is electrically connected to the adjustment resistor R80, and the other end of the adjustment switch Q is electrically connected to the positive electrode charging port CON1. The adjustment switch Q is an MOS tube or other types of switch tubes. When the adjustment switch Q is the MOS tube, the on and off of the adjustment switch Q can be regulated by applying a high level voltage or a low level voltage to the adjustment switch Q. In the present embodiment, the adjustment switch Q is, for example, a PMOS tube. When a low level voltage is applied to a driving pole of the adjustment switch Q, the adjustment switch Q is turned on. When a high level voltage is applied to the driving pole of the adjustment switch Q, the adjustment switch Q is turned off. When the adjustment switch Q is turned off, the adjustment resistor R80 is equivalent to being in an idle state. Therefore, at this time, an output voltage VOUT of the first voltage adjustment unit 122 is as defined in formula (1). When the adjustment switch Q is turned on, the adjustment resistor R80 is connected in parallel with the first preset resistor R22, thereby reducing a resistance value of the pull-up resistor, so the output voltage VOUT of the first voltage adjustment unit 122 increases. At this time, the output voltage VOUT of the first voltage adjustment unit 122 is as defined in formula (3).

$$VOUT = 2.5V/R25*[R25+(R22*R80)/(R22+R80)] \quad (3).$$

Please refer to FIG. 1 to FIG. 5, the present invention provides a cleaning system, where the cleaning device 200 sends a feedback signal to the first controller 121 under the trigger of the voltage signal of the charger 120 to establish a handshake communication. The cleaning device 200 includes a second controller 210, a second voltage adjustment unit 220 and a battery pack 230 which are electrically connected in sequence. The second voltage adjustment unit 220 is configured to control an output voltage of the battery pack 230. When the charger 120 is in full contact with the charging port of the cleaning device 200, the second controller 210 establishes a communication connection with the first controller 121. Specifically, if the second controller 210 and the first controller 121 fail to establish a stable communication relationship, the transmission message between the second controller 210 and the first controller 121 is likely to be wrong. During the connection process of the second controller 210, the second controller 210 first receives power supply, and then sends a signal to the charger 120. The signal sent at this time may be wrong. Therefore, when the communication is fully established, the sent information is verified to be correct, and the signal received by the second controller 210 at this time is sent to the first controller 121 as the first signal. The first controller 121 receives the first signal, and sends the first voltage adjustment signal to the first voltage adjustment unit 122. The first voltage adjustment unit 122 completes an adjustment of the output voltage value of the first voltage adjustment unit 122 by adjusting the connection or disconnection of the adjustment resistor R80. Specifically, the output voltage of the first voltage adjustment unit 122 is converted from the first output voltage to the second output voltage. The second output voltage reaches the charging voltage of the battery pack 230, thereby completing the charging of the battery pack 230. It should be noted that the trigger mode of the first controller 121 and the second controller 210 includes but is not limited to the trigger mode of electronic switch trigger and mechanical switch trigger. Accordingly, the generation mode of the above signal for voltage switching includes but is not limited to electronic switch trigger and mechanical switch trigger. The second controller 210 exists in the form of a control board.

In one or more embodiments of the present invention, during the process of establishing a stable electrical connection between the cleaning device 200 and the charger 120, the output voltage of the first voltage adjustment unit 122 is the first output voltage; in the charging state, the output voltage of the first voltage adjustment unit 122 is the second output voltage; and when the charger 120 is in a dormant mode or a no-load mode, the output voltage of the first voltage adjustment unit 122 is the third output voltage. The second output voltage is greater than or equal to the rated charging voltage of the charger 120, and the first output voltage and the third output voltage are both less than the rated charging voltage of the charger 120. The third output voltage is less than or equal to the first output voltage. After the process of establishing a stable electrical connection or communication connection between the cleaning device 200 and the charger 120 is completed, the charger 120 is switched from the standby state to the charging state, and the power consumption of the charger 120 in the standby state is less than the power consumption in the charging state.

Please refer to FIG. 1 to FIG. 5, in the charging base station 100 and the cleaning system provided by the present invention, when the charging base station 100 is connected into an AC power and the cleaning device 200 is not placed on the placement portion 111, the output voltage of the charger 120 is the first output voltage, and the charger 120 is in a dormant mode, thereby achieving low power consumption standby. When the cleaning device 200 is to be charged, the cleaning device 200 will be placed at the placement portion 111. During the process of placing the cleaning device 200 on the placement portion 111, the charging base station 100 maintains the first output voltage, so even at the moment when the cleaning device 200 is connected to the placement portion 111, and an instantaneous increase in resistance occurs, sparking can be avoided due to a small contact voltage of the cleaning device 200.

Please refer to FIG. 1 to FIG. 5, after the second controller 210 is electrically connected to the charger 120, the charger 120 supplies power to the second controller 210, thereby activating the second controller 210, so that the second controller 210 can send a signal to the first controller 121. During the period of placing the cleaning device 200 on the placement section 111, it is difficult for the second controller 210 to send accurate and complete information to the first controller 121, so the first controller 121 does not recognize the signal sent by the second controller 210, to avoid sparking caused by too rapid voltage switching and reduce the probability of sparking as much as possible. When the communication interface is completely and stably connected, the first signal sent by the second controller 210 to the first controller 121 is received, and the first controller 121 sends a first voltage adjustment signal to a first voltage adjustment unit 122. In the process of the first controller 121 judging the correctness of the signal, the connection of the micro switch wakes up the first controller 121, so that the charger 120 is out of the low power consumption state, and it is judged whether the signal received by the first controller 121 is accurate. If the signal is accurate, the first output voltage is adjusted to the second output voltage, and the first controller 121 replies to the second controller 210 so that the second controller 210 determines to start charging the battery pack 230.

Please refer to FIG. 1 to FIG. 5, in an embodiment of the present invention, by monitoring a charging state of the battery pack 230, when the battery pack 230 is fully charged, the second controller 210 sends a second signal to the first controller 121. The second signal is transmitted through a serial port and can be output in the form of a low level signal or a high level signal. When the first controller 121 receives the second signal, the first controller 121 sends a second voltage adjustment signal to the first voltage adjustment unit 122, thereby adjusting the second output voltage to the first output voltage. When the second output voltage is converted to the first output voltage, the charger 120 returns to the dormant mode and maintains a low power consumption state.

Please refer to FIG. 1 to FIG. 5. In other embodiments of the present invention, after the first controller 121 is awakened, it can continuously detect whether the first signal or the second signal is received at a preset frequency. In the present invention, a detection threshold is preset. When the number of signal detections exceeds the detection threshold, it is believed that the first controller 121 has not received instructions for multiple consecutive times, and the first controller 121 returns to the dormant mode and maintains the first output voltage or adjusts the second output voltage to the first output voltage. When the battery pack 230 is in a charging state, the second controller 210 can still send a charging signal to the first controller 121 at regular intervals to prevent the charger 120 from entering the dormant mode. When the battery pack 230 is fully charged, the second controller 210 can stop sending signals. When the first controller 121 fails to receive signals for multiple consecutive times, it will automatically enter a low power consumption dormant mode. A communication time threshold is set in the cleaning system. After the cleaning device 200 is placed on the placement portion 111, the cleaning device 200 and the charger 120 start to implement a handshake. If a cumulative number of handshake errors exceeds the communication time threshold, the handshake fails, the communication between the cleaning device 200 and the charger 120 times out, and the cleaning device 200 and/or the charger 120 is shut down.

Please refer to FIG. 1 to FIG. 5. In the present invention, when the battery pack 230 is fully charged, the cleaning device 200 enters a standby state. In the standby state, an output voltage of the charger 120 is adjusted to the first output voltage, and the battery pack 230 is neither charged nor discharged. In the standby state, a voltage maintained by an internal circuit of the cleaning device 200 is less than a rated working voltage of the cleaning device 200 to keep the cleaning device 200 in a low power consumption state. The present invention does not limit user's operations after the battery pack 200 is fully charged. For example, after the battery pack 230 is fully charged, the cleaning device 200 is detached from the base station body 110 and enters a working state. For example, the cleaning device 200 can be immediately shut down or shut down on schedule after the battery pack 230 is charged, etc.

Please refer to FIG. 1 to FIG. 5, the cleaning system and charging base station provided by the present invention can be applied to floor cleaning device, such as scrubbers, vacuum cleaners, sweepers, and the like. The use of the cleaning system and charging base station provided by the present invention can not only prevent sparking when the device body of the cleaning device is connected during charging, but also reduce the power consumption of the charging base station and the cleaning device. Specifically, when a circuit does not change, the equivalent resistance of the system is unchanged, so the power consumption at this time depends on the change in voltage. When an output voltage is reduced to, for example, 1/3 of an original output voltage, the power consumption becomes 1/9 of the original power consumption, and the power consumption reduction effect is significant. Besides, the cleaning system and charging base station provided by the present invention achieve the above-mentioned technical effects at a relatively low cost. In addition, the signal sending and receiving in the working process can be judged, enabled and disabled only through simple logic elements, thereby having high control efficiency and low error probability.

As shown in FIG. 1 and FIG. 6, the cleaning system includes an alternating current/alternating current conversion module, a constant current/constant voltage control module, a single-chip microcomputer adjustment module, and a communication module. The alternating current/alternating current conversion module is abbreviated as the AD/DC conversion module, and the constant current/constant voltage control module is abbreviated as the CC/CV control module. The AD/DC conversion module, the single-chip microcomputer adjustment module, the CC/CV control module, and the communication module are respectively in communication connection with the first controller 121. The AD/DC conversion module converts an AC power connected to the charger 120 into a DC power, which is used for powering the charger 120.

Please refer to FIG. 1 and FIG. 6, in an embodiment of the present invention, a single-chip microcomputer adjustment module processes a collected electrical signal and feeds it back to the first controller 121 to adjust an output voltage and an output current of the charger 120. Specifically, the electrical signal collected by the single-chip microcomputer adjustment module includes the output voltage and the output current of the charger 120. Further, the single-chip microcomputer adjustment module includes a processor and a memory, and the memory is pre-stored with setting data. The processor collects the electrical signal in the charger 120 and compares the collected electrical signal with the setting data in the memory, and feeds back a comparison result to the first controller 121; the first controller 121 sends an instruction for adjusting the output voltage and the output current according to the comparison result.

Referring to FIG. 1 and FIG. 6, in an embodiment of the present invention, the CC/CV control module switches the charger 120 to be a CC mode or a CV mode. Specifically, the first voltage adjustment unit 122 has a constant current mode and a constant voltage mode, and when the first voltage adjustment unit 122 receives the first voltage adjustment signal, the first voltage adjustment unit increases the output voltage and the output current to the cleaning device 200. Specifically, the charger 120 will operate in the CV mode and adjust the constant voltage according to a setting voltage until a load consumes enough current to reach a setting current, and this setting current arrangement is usually referred to as a current limit. Once the current provided reaches the setting current, the charger 120 will switch from the CV mode to the CC mode. In the CC mode, the charger 120 adjusts the constant current according to a setting current value; and since it is no longer a parameter to be adjusted, the voltage begins to drop. In contrast, if the charger 120 adjusts the constant current in the CC mode, it will continue to operate in this manner until the voltage on the load reaches the setting value; then the charger 120 switches the mode from the CC mode to the CV mode. In the CV mode, the charger 120 will resume the voltage adjustment as described above.

Please refer to FIG. 1 and FIG. 6, in an embodiment of the present invention, the communication module determines and feeds back whether the charger 120 is in communication connection with an object to be charged to the first controller 121.

Please refer to FIG. 1 and FIG. 6, in an embodiment of the present invention, the first controller 121 collects information fed back from the AD/DC conversion module, the single-chip microcomputer adjustment module, the CC/CV control module and the communication module; and controls the AD/DC conversion module, the single-chip microcomputer adjustment module, the CC/CV control module and the communication module.

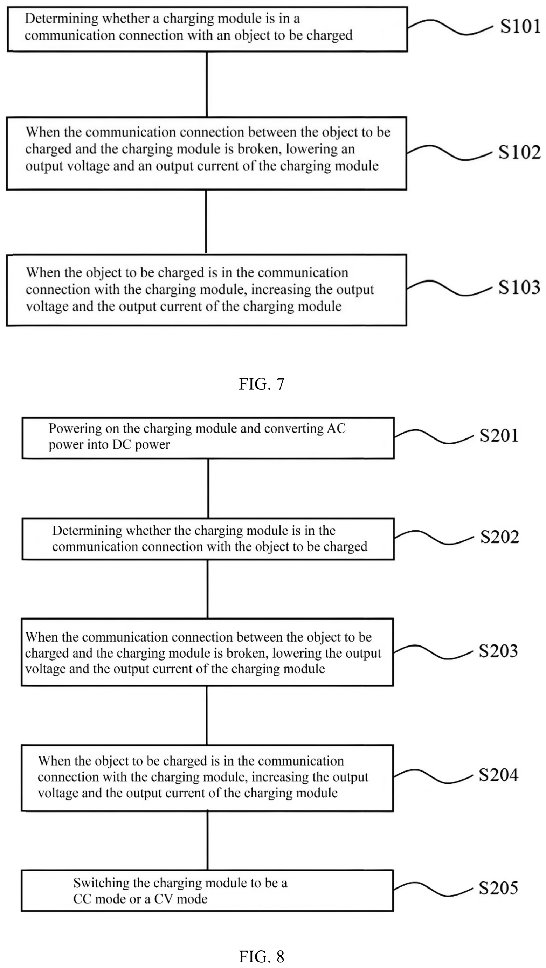

Referring to FIG. 1, FIG. 6 and FIG. 7, in an embodiment of the present invention, the charger 120 of the present embodiment is configured to charge an object to be charged. The object to be charged is a cleaning device 200, and specifically, a battery pack 230. The charging method adopted by the present invention includes:

S101, determining whether the charger 120 is in a communication connection with the object to be charged.

The communication module determines whether the charger 120 is in communication connection with the object to be charged, and feeds back information to the first controller 121.

S102, when the communication connection between the object to be charged and the charger 120 is broken, lowering an output voltage and an output current of the charger 120.

Please refer to FIG. 1, FIG. 6 and FIG. 7, in an embodiment of the present invention, the first controller 121 receives information from a communication module, and the object to be charged disconnects the communication with the charger 120; the first controller 121 determines a setting voltage and a setting current in a single-chip microcomputer adjustment module according to the information of the communication module; the single-chip microcomputer adjustment module collects the output voltage and the output current of the charger 120, and compares them with the setting voltage and the setting current, and feeds back a comparison result to the first controller 121; the first controller 121 controls the single-chip microcomputer adjustment module to lower the output voltage and the output current of the charger 120 according to the information fed back by the single-chip microcomputer adjustment module.

Furthermore, when the object to be charged is disconnected from the communication with the charger 120, the setting data in the memory of the single-chip microcomputer adjustment module are a setting voltage U2 and a setting voltage U3, and the output voltage of the charger 120 is higher than the setting voltage U2, then the single-chip microcomputer adjustment module lowers the output voltage of the charger 120 to the setting voltage U3; the setting voltage U2 and the setting voltage U3 may be equal or not, and both are lower than the charging voltage during normal charging.

S103, when the object to be charged is in communication connection with the charger 120, increasing the output voltage and the output current of the charger 120.

The first controller 121 receives information from a communication module, and the object to be charged is in communicative connection to the charger 120; the first controller 121 determines a setting voltage and a setting current in a single-chip microcomputer adjustment module according to the information of the communication module; the single-chip microcomputer adjustment module collects the output voltage and the output current of the charger 120, compares them with the setting voltage and the setting current, and feeds back a comparison result to the first controller 121; the first controller 121 controls the single-chip microcomputer adjustment module to increase the output voltage and the output current of the charger 120 according to the information fed back by the single-chip microcomputer adjustment module. Specifically, the increase process of the output voltage and the output current of the charger 120 is a stepwise increase.

Furthermore, when the object to be charged is in communication connection with the charger 120, the setting data in the memory of the single-chip microcomputer adjustment module is the setting voltage U1, and an output voltage of the charger 120 is lower than the setting voltage U1, then the single-chip microcomputer adjustment module increases the output voltage of the charger 120 to the setting voltage U1.

Furthermore, the setting voltage U3 is 40% to 60% of the setting voltage U1; the setting voltage U1 is a battery voltage of the charger 120, and the battery voltage of the charger 120 is not less than 25V. Specifically, the battery voltage = 4.2V * battery number + 2V, and the battery number is not less than 6. In the present embodiment, the battery number is 8, so the battery voltage is about 35V; the setting voltage U1 is the same as the battery voltage, and the setting voltage U1 is about 35V; the setting voltage U3 is 50% of the setting voltage U1.

Referring to FIG. 1 and FIG. 6 to FIG. 8, in an embodiment of the present invention, the charging method adopted by the charger 120 includes the following.

S201, powering on the charger 120 and convertingAC power into DC power.

After the charger 120 is powered on, the single-chip microcomputer adjustment module receives an electrical signal and feeds it back to the first controller 121, and the first controller 121 controls an AD/DC conversion module to convert AC power connected to the charger 120 into DC power.

S202, determining whether the charger 120 is in the communication connection with the object to be charged.

The communication module determines whether the charger 120 is in communication connection with the object to be charged, and feeds back information to the first controller 121.

S203, when the communication connection between the object to be charged and the charger 120 is broken, lowering the output voltage and the output current of the charger 120.

The first controller 121 receives information from a communication module, and the communication connection between the object to be charged and the charger 120 is broken; the first controller 121 determines a setting voltage and a setting current in a single-chip microcomputer adjustment module according to the information from the communication module; the single-chip microcomputer adjustment module collects the output voltage and the output current of the charger 120, compares them with the setting voltage and the setting current, and feeds back a comparison result to the first controller 121; the first controller 121 controls the single-chip microcomputer adjustment module to lower the output voltage and the output current of the charger 120 according to the information fed back by the single-chip microcomputer adjustment module.

S204, when the object to be charged is in the communication connection with the charger 120, increasing the output voltage and the output current of the charger 120.

The first controller 121 receives information from a communication module, and the object to be charged is in communicative connection to the charger 120; the first controller 121 determines a setting voltage and a setting current in a single-chip microcomputer adjustment module according to the information of the communication module; the single-chip microcomputer adjustment module collects the output voltage and the output current of the charger 120, compares them with the setting voltage and the setting current, and feeds back a comparison result to the first controller 121; the first controller 121 controls the single-chip microcomputer adjustment module to increase the output voltage and the output current of the charger 120 according to the information fed back by the single-chip microcomputer adjustment module.

S205, switching the charger 120 to be a CC mode or a CV mode.

A CC/CV control module automatically switches the charger 120 to be the CC mode or the CV mode according to specific circumstances.

It should be noted that the above charging method is not performed in a sequential order, but is performed according to the specific situation of the charger 120.

In the embodiment of the present invention, a communication connection is established between the object to be charged and the charger 120 through a physical connection.

The charger 120 of the embodiment of the present invention can be used for cleaning device, including sweeping robots, mopping robots, floor scrubbing robots, sweeping and mopping integrated robots, scrubbing and mopping integrated robots, etc. The cleaning system includes a base station and a cleaning component, the charger 120 is arranged in the base station, and the object to be charged is the cleaning component, and the object to be charged can also be referred to as a cleaning device. The above-mentioned base station corresponds to the base station body 110.

In an embodiment of the present invention, the cleaning component includes a floor scrubbing component. During a floor cleaning process, the floor scrubbing component sprays a cleaning solvent and/or clean water and so on onto the floor, and the floor scrubbing component cleans the sprayed floor to complete the cleaning work.

In a second embodiment of the present invention, the cleaning component includes a sweeping component and a dust suction component. During a cleaning process, the sweeping component sweeps dust, garbage, etc. to a dust suction port of the dust suction component, and the dust suction component intakes and temporarily stores the dust, garbage, etc. The sweeping component can be a side brush or a roller brush, which is not limited here.

In a third embodiment of the present invention, the cleaning component includes a mopping component, which is in contact with the ground. During the moving of the mopping robot, the mopping component mops the ground to clean the ground.

During the cleaning process of the cleaning device and the cleaning process of the cleaning device docking with the base station mentioned above, the cleaning device needs to consume electrical power. When the electrical power is insufficient, the cleaning component needs to be docked with the base station for charging so that the cleaning device has sufficient electrical power to clean the floor. In order to facilitate the use of the cleaning device, when the power of the cleaning component is lower than a certain value, the cleaning component automatically moves to the base station for charging, or reminds the user that the power is insufficient so that the user can move the cleaning component to the base station for charging; or, when the floor cleaning work is completed, the cleaning component is placed back to the base station for charging.

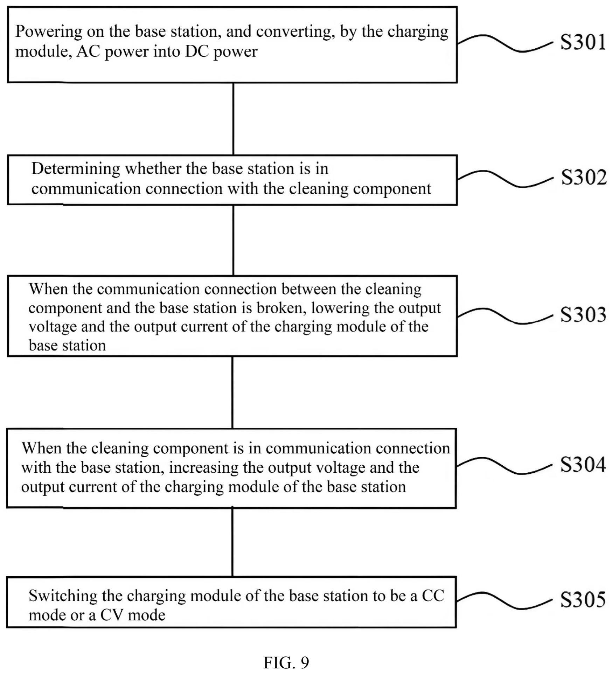

Please refer to FIG. 1, FIG. 6 and FIG. 9, in an embodiment of the present invention, the cleaning component of the cleaning device is charged using the following charging method.

S301, powering on the base station, and converting AC power into DC power by the charger 120.

After the base station is powered on, that is, the charger 120 is powered on, the single-chip microcomputer adjustment module receives an electrical signal and feeds it back to the first controller 121. The first controller 121 controls an AD/DC conversion module to convert AC power connected to the charger 120 into DC power.

S302, determining whether the base station is in the communication connection with the cleaning component.

The communication module determines whether the base station is in communication connection with the cleaning component, that is, whether the charger 120 is in communication connection with the object to be charged, and feeds back information to the first controller 121.

S303, when the communication connection between the cleaning component and the base station is broken, lowering the output voltage and the output current of the charger 120 of the base station.

Please refer to FIG. 1, FIG. 6 and FIG. 9, in an embodiment of the present invention, the first controller 121 receives information from a communication module, the cleaning component leaves the base station and the communication connection between the cleaning component and the base station is broken; the first controller 121 determines a setting voltage and a setting current in a single-chip microcomputer adjustment module according to the information from the communication module; the single-chip microcomputer adjustment module collects the output voltage and the output current in the charger 120, and compares them with the setting voltage and the setting current, then feeds back a comparison result to the first controller 121; the first controller 121 controls the single-chip microcomputer adjustment module to lower the output voltage and the output current of the charger 120 according to the information fed back by the single-chip microcomputer adjustment module.

S304, when the cleaning component is in communication connection with the base station, increasing the output voltage and the output current of the base station charger 120.

Please refer to FIG. 1, FIG. 6 and FIG. 9, in an embodiment of the present invention, the first controller 121 receives information from a communication module, the cleaning component returns to the base station, and the cleaning component is connected to the base station in communication; the first controller 121 determines a setting voltage and a setting current in a single-chip microcomputer adjustment module according to the information of the communication module; the single-chip microcomputer adjustment module collects the output voltage and the output current in the charger 120, compares them with the setting voltage and the setting current, and feeds back a comparison result to the first controller 121; the first controller 121 controls the single-chip microcomputer adjustment module to increase the output voltage and the output current of the charger 120 according to the information fed back by the single-chip microcomputer adjustment module.

S305, switching the charger 120 of the base station to be a CC mode or a CV mode.

A CC/CV control module automatically switches the charger 120 to be the CC mode or the CV mode according to the specific conditions of the base station.

Of course, the present invention does not limit the application scenario of the charger 120, and the charger 120 can be used not only in cleaning device but also in other electronic devices.

In summary, compared with the prior art, the charger and charging method of the present invention have the following advantages: by automatically adjusting an output voltage and an output current of the charger, when the object to be charged is disconnected from the charger, the charger will lower its own output voltage and a no-load voltage amplitude; at this time, when the object to be charged is in communication connection with the charger, since the charger has a lower output voltage value when initially connected, the sparking risk at the moment of contact can be effectively prevented. When the two establish communication therebetween, the output voltage and the output current of the charger will then rise to the normal charging voltage and charging current values, and the object to be charged will begin to be charged. The present invention reduces the no-load voltage, and since the voltage is relatively low at the moment of contact, contact sparking can be avoided, thereby reducing the risk of damage to the internal devices of the object to be charged.

The embodiments of the present invention disclosed above are only used to help illustrate the present invention. The embodiments do not describe all the details in detail, nor do they limit the present invention to the specific embodiments described. Obviously, many modifications and changes can be made according to the content of this specification. This specification selects and specifically describes these embodiments in order to better explain the principles and practical applications of the present invention, so that those skilled in the art can understand and use the present invention well. The present invention is limited only by the claims and their full scope and equivalents.

**Claims**

1. A charging base station, comprising:

   a base station body, provided with a placement portion, the placement portion allowing a cleaning device to be connected; and
   a charger, configured to supply power to the cleaning device and provided with multiple output voltage levels; wherein, when the charger is in a standby state, a standby voltage of the charger is less than a preset working voltage of the charger.

2. The charging base station according to claim 1, wherein when the charger is unloaded or dormant or the charger is in a process of establishing a stable electrical connection or communication connection between the charger and the cleaning device, the charger is in the standby state.

3. The charging base station according to claim 1, wherein the standby state of the charger comprises a no-load mode and a dormant mode; when the cleaning device is detached from the base station body, the charger is switched to the no-load mode; and when the cleaning device is fully charged on the charging base station, the charger is switched to the dormant mode; wherein, the dormant mode refers to a state in which the charging base station is connected to the cleaning device but not in operation.

4. The charging base station according to claim 1, wherein, in the standby state, a power consumption of the charging base station or the charger is less than or equal to 0.5W.

5. The charging base station according to claim 1, wherein after a process of establishing a stable electrical connection or communication connection between the cleaning device and the charger is completed, the charger is switched from the standby state to a charging state, and a power consumption of the charger in the standby state is less than a power consumption in the charging state.

6. The charging base station according to claim 5, wherein when the charger receives a first signal triggered by the cleaning device or actively triggered by a user, the charger enters the charging state, and an output voltage of the charger is switched from the standby voltage to the preset working voltage; wherein, the standby voltage is referred to as a first output voltage, and the preset working voltage is referred to as a second output voltage.

7. The charging base station according to claim 6, wherein the first signal is a trigger signal for the charger to enter the charging state, wherein the first signal is a signal indicating that the charger has successfully executed a handshake with the cleaning device.

8. The charging base station according to claim 6, wherein as soon as the cleaning device contacts the placement portion, the charger and the cleaning device enter a preparatory process for establishing the stable electrical connection, and the charger is ready to receive the first signal; when the cleaning device is placed in alignment on the placement portion to complete the stable electrical connection between the cleaning device and the charger so that a communication handshake therebetween is successfully established, the charger receives the first signal sent by the cleaning device.

9. The charging base station according to claim 8, wherein the charger comprises a first controller and a first voltage adjustment unit, the first controller is configured to receive the first signal and output a first voltage adjustment signal under a trigger of the first signal; the first voltage adjustment unit is electrically connected to the first controller, the first voltage adjustment unit is configured to charge the cleaning device; wherein, under a trigger of the first voltage adjustment signal, an output voltage of the first voltage adjustment unit is switched from the first output voltage to the second output voltage.

10. The charging base station according to claim 6, wherein a trigger mode of the first signal comprises one or more of a communication handshake trigger, a passive switch trigger, an active switch trigger and a wireless charging induction trigger;

in a communication handshake trigger mode, the charging base station and the cleaning device are respectively provided with corresponding matching communication terminals to realize a communication connection, thereby realizing a signal trigger of a preset condition;

in a passive switch trigger mode, the charging base station is provided with a micro switch associated with an output state of the charger, and a state change of the micro switch is driven during an operation process of placing the cleaning device in alignment on the charging base station, thereby realizing a corresponding signal trigger;

in an active switch trigger mode, the charging base station is provided with a switching button associated with an output state of the charger, and after the cleaning device is placed in alignment on the charging base station, an active signal trigger is realized by operating the switching button;

in a wireless charging induction trigger mode, the charging base station and the cleaning device are respectively provided with matching wireless charging components, and when an wireless induction intensity therebetween exceeds a preset threshold, a corresponding signal is triggered to be output.

11. The charging base station according to claim 9, wherein the cleaning device and the first controller are in a contact-type electrically connection, the charger comprises a communication interface, and when the cleaning device is placed in alignment on the placement portion, an electrical connection is established between the cleaning device and the first controller through the communication interface;

during a process of establishing the electrical connection between the cleaning device and the first controller, the first controller verifies the first signal through a protocol of the communication interface; only when the first signal passes a verification, the first controller is able to output the first voltage adjustment signal under the trigger of the first signal.

12. The charging base station according to claim 9, wherein, in the process of establishing a stable electrical connection between the cleaning device and the charger, the output voltage of the first voltage adjustment unit is the first output voltage, and the first output voltage is capable of activating a control circuit of the cleaning device so that the cleaning device is able to feed back a signal to the charger; in the charging state, the output voltage of the first voltage adjustment unit is the second output voltage, and when the charger is in the dormant mode or no-load mode, the output voltage of the first voltage adjustment unit is the first output voltage; wherein the second output voltage is within a safe fluctuation range of a rated charging voltage of the charger.

13. The charging base station according to claim 12, wherein the first output voltage is 10% to 50% of the second output voltage; the first output voltage ranges 7V to 15V; and the second output voltage ranges 24V to 36V.

14. The charging base station according to claim 12, wherein the first voltage adjustment unit has a constant current mode and a constant voltage mode, and when the first voltage adjustment unit receives the first voltage adjustment signal, the first voltage adjustment unit increases an output voltage and an output current to the cleaning device.

15. The charging base station according to claim 12, wherein a charging mode between the first voltage adjustment unit and the cleaning device comprises a wired charging and/or a wireless charging mode;

wherein, in the wired charging mode, the charging base station and the cleaning device are respectively provided with matching charging terminals and matching communication terminals to realize a wired charging and a wired communication therebetween;

in the wireless charging mode, the charging base station and the cleaning device are respectively provided with matching wireless charging components and matching wireless communication components to achieve a wireless charging and a wireless communication therebetween.

16. The charging base station according to claim 14, wherein the first controller is configured to output a second voltage adjustment signal under a trigger of a second signal or a third signal of the cleaning device;

the second signal is a trigger signal for the charger to enter a dormant mode, wherein the second signal comprises a feedback signal sent to the charger after the cleaning device is fully charged;

the third signal is a trigger signal for the charger to enter an no-load mode, wherein the third signal comprises a feedback signal generated when the cleaning device is disconnected from the charger.

17. The charging base station according to claim 16, wherein, under a trigger of the second voltage adjustment signal, the output voltage of the first voltage adjustment unit is adjusted from the second output voltage to the first output voltage.

18. The charging base station according to claim 17, wherein, in the standby state of the charger, if the first controller receives a function wake-up instruction, the first controller outputs a third voltage adjustment signal to the first voltage adjustment unit, wherein the first voltage adjustment unit increases the output voltage under an action of the third voltage adjustment signal, and the increased output voltage is greater than the first output voltage and less than or equal to the second output voltage.

19. The charging base station according to claim 18, wherein the charging base station has multiple functions for use with cleaning device, and the function wake-up instruction is triggered to be output to the first controller by a user through a button, an induction switch or a touch screen on the cleaning device or the charging base station, so as to adjust the output voltage to meet a voltage required for the charging base station to perform various functions.

20. A cleaning system, comprising:

the charging base station according to any one of claims 1 to 19; and
the cleaning device, connected to the charging base station and configured to send a variety of control signals to the charging base station.

21. The cleaning system according to claim 20, wherein the cleaning device is configured to feed back a signal to the first controller to establish a handshake communication when triggered by a standby voltage signal of the charger.

22. The cleaning system according to claim 20, wherein the cleaning device comprises a second controller, a second voltage adjustment unit and a battery pack electrically connected in sequence, and the second voltage adjustment unit is configured to control an output voltage of the battery pack; when the charger is in full contact with a charging port of the cleaning device, the second controller establishes a communication connection with the first controller and feeds back the first signal to the first controller.

23. The cleaning system according to claim 22, wherein the cleaning device is configured to enter the standby state after being fully charged, and a voltage maintained by an internal circuit of the cleaning device in the standby state is less than a preset working voltage of the cleaning device; and when the cleaning system as a whole is in a standby state, an overall standby power consumption of the cleaning system is less than or equal to 0.5W.

24. The cleaning system according to claim 22, wherein after the battery pack is fully charged, the second controller feeds back a second signal to the first controller, and when the cleaning device is ready to be disconnected from the charger, the second controller feeds back a third signal to the first controller.

25. The cleaning system according to claim 24, wherein a trigger mode of the third signal comprises one or more of a communication link disconnection trigger, a passive switch trigger, a wireless charging induction intensity weakening trigger, an active switch trigger, and an active handle induction trigger;

in a communication link disconnection trigger mode, the charging base station and the cleaning device are respectively provided with corresponding matching communication terminals, and a communication link disconnection therebetween triggers an output of the third signal;
in a passive switch trigger mode, the charging base station is provided with a micro switch associated with an output state of the charger, a state change of the micro switch is driven by an operation process of detaching the cleaning device from the charging base station, thereby triggering the third signal;
in an active switch trigger mode, the charging base station is provided with a switching button associated with an output state of the charger, and after the cleaning device is placed on the charging base station, the third signal is triggered to be output by operating the switching button;
in a wireless charging induction intensity weakening trigger mode, the charging base station and the cleaning device are respectively provided with matching wireless charging components, and when an wireless induction intensity therebetween is less than a preset threshold, the third signal is triggered to be output;
in the active handle induction trigger mode, a handle of the cleaning device is provided with a touch/infrared induction switch associated with an output state of the charger; when a user grasps the handle with hand, the touch/infrared induction switch is triggered, thereby triggering the output of the third signal.

26. The cleaning system according to claim 20, wherein the cleaning device is a floor cleaning device.

27. A charger for a cleaning device, installed in the charging base station according to claim 1, comprising:

a single-chip microcomputer adjustment module, configured to process collected electrical signal and feed it back to the first controller, and configured to adjust an output voltage and an output current of the charger;

a communication module, configured to determine and feed back whether the charger is in a communication connection with the cleaning device to a first controller;

a constant current/constant voltage control module, configured to switch the charger to a constant current mode or a constant voltage mode; and

a first controller, configured to collect information fed back by the single-chip microcomputer adjustment module, the constant current/constant voltage control module and the communication module; control the single-chip microcomputer adjustment module, the constant current/constant voltage control module and the communication module; and when the communication connection between the cleaning device and the charger is broken, control the single-chip microcomputer adjustment module to lower a voltage of the charger.

28. The charger for cleaning device according to claim 27, wherein the single-chip microcomputer adjustment module comprises a processor and a memory; wherein the memory is pre-stored with setting data, the processor is configured to compare the collected electrical signal with the setting data in the memory, and feed back a comparison result to the first controller to maintain the voltage of the charger at a standby voltage or a preset working voltage.

29. The charger for cleaning device according to claim 28, wherein the electrical signal collected by the single-chip microcomputer adjustment module comprises the output voltage and the output current of the charger; when an object to be charged is in a communication connection with the charger, an increase process of the output voltage and the output current of the charger is a stepwise rise.

30. A charging method of a cleaning system, based on the charging base station according to claim 1, wherein the charging method comprises the following steps:

before a stable electrical connection is established between the cleaning device and the charger, maintaining a voltage of the charger at a standby voltage;

after the stable electrical connection between the cleaning device and the charger is established, increasing the voltage of the charger to the preset working voltage, then charging the cleaning device by the charger until the charger enters the standby state.

31. The charging method of the cleaning system according to claim 30, wherein the increasing the voltage of the charger comprises:

when the cleaning device is connected to the charging base station, determining whether a communication connection has been successfully established between the cleaning device and the charger;

if the communication connection has been successfully established between the cleaning device and the charger, receiving, by the first controller, a first signal; outputting, by the first controller, a first voltage adjustment signal to a first voltage adjustment unit; and increasing, by the first voltage adjustment unit, the voltage of the charger to the preset working voltage; and

if the communication connection between the cleaning device and the charger has not been successfully established, maintaining the voltage of the charger at the standby voltage.

32. The charging method of the cleaning system according to claim 30, comprising the following steps:

when the cleaning device is fully charged, feeding back, by the cleaning device, a second signal to the first controller;

when the cleaning device is ready to be detached from the charging base station, feeding back, by the cleaning device, a third signal to the first controller;

when the first controller receives the second signal or the third signal, stopping, by the charger, charging and entering the standby state;

when in the standby state, maintaining the voltage of the charger at the standby voltage, the standby voltage being lower than the preset working voltage.

33. The charging method of a cleaning system according to claim 32, wherein a trigger priority of the third signal is higher than a trigger priority of the first signal and a trigger priority of the second signal; the trigger priority of the second signal is higher than the trigger priority of the first signal.

**34.** A standby method of a cleaning system, based on the charging base station according to claim 1, comprising:

when the charger is in the standby state, maintaining the charger at the standby voltage, the standby voltage being greater than or equal to a minimum voltage required to wake up various functions of the cleaning system; and

when the charger receives a function wake-up instruction, releasing the standby state, the charger increasing a voltage to the preset working voltage and performing subsequent work.

**35.** The standby method of the cleaning system according to claim 34, wherein the function wake-up instruction comprises a self-cleaning function wake-up instruction, a charging wake-up instruction, a hot air drying function wake-up instruction and a reservation function wake-up instruction; wherein the multiple function wake-up instructions respectively have corresponding preset working voltages; wherein the cleaning device is a scrubber or a sweeping robot.

**36.** The standby method of the cleaning system according to claim 34, wherein when the cleaning system completes executing a function corresponding to the function wake-up instruction, a third voltage adjustment signal is generated and fed back to the charger;

when the charger receives the third voltage adjustment signal, the charger returns to the standby state and maintains the standby voltage.

FIG. 1

FIG. 2

FIG. 3

FIG. 4

FIG. 5

FIG. 6

| Determining whether a charging module is in a communication connection with an object to be charged | S101 |

| When the communication connection between the object to be charged and the charging module is broken, lowering an output voltage and an output current of the charging module | S102 |

| When the object to be charged is in the communication connection with the charging module, increasing the output voltage and the output current of the charging module | S103 |

FIG. 7

| Powering on the charging module and converting AC power into DC power | S201 |

| Determining whether the charging module is in the communication connection with the object to be charged | S202 |

| When the communication connection between the object to be charged and the charging module is broken, lowering the output voltage and the output current of the charging module | S203 |

| When the object to be charged is in the communication connection with the charging module, increasing the output voltage and the output current of the charging module | S204 |

| Switching the charging module to be a CC mode or a CV mode | S205 |

FIG. 8

Powering on the base station, and converting, by the charging module, AC power into DC power — S301

Determining whether the base station is in communication connection with the cleaning component — S302

When the communication connection between the cleaning component and the base station is broken, lowering the output voltage and the output current of the charging module of the base station — S303

When the cleaning component is in communication connection with the base station, increasing the output voltage and the output current of the charging module of the base station — S304

Switching the charging module of the base station to be a CC mode or a CV mode — S305

FIG. 9

## INTERNATIONAL SEARCH REPORT

| International application No. |
| --- |
| **PCT/CN2024/074958** |

| A. | CLASSIFICATION OF SUBJECT MATTER |
| --- | --- |

H02J7/00(2006.01)i; A47L9/28(2006.01)i

According to International Patent Classification (IPC) or to both national classification and IPC

| B. | FIELDS SEARCHED |
| --- | --- |

Minimum documentation searched (classification system followed by classification symbols)

IPC:H02J7/+,A47L9/+

Documentation searched other than minimum documentation to the extent that such documents are included in the fields searched

Electronic data base consulted during the international search (name of data base and, where practicable, search terms used)

CNTXT, ENTXT, ENTXTC, WPABS, DWPI, CNKI, IEEE: 充电, 清洁, 扫地, 基座, 机座, 待机, 多, 电压, 损耗, 能耗, 功耗, charge, clean, base, standby, multi, voltage, loss, dissipation, consumption

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 112217246 A (NANJING LIYUAN MICROELECTRONICS CO., LTD.) 12 January 2021 (2021-01-12) <br> description, paragraphs 3-37, and figures 1-2 | 1-36 |
| Y | CN 110113978 A (LG ELECTRONICS INC.) 09 August 2019 (2019-08-09) <br> description, paragraphs 80-355, and figures 18-30 | 1-36 |
| Y | CN 201947178 U (TPV TECHNOLOGY LTD.) 24 August 2011 (2011-08-24) <br> description, paragraphs 19-36, and figure 2 | 1, 4, 10, 23, 25 |
| Y | CN 210430995 U (SHENZHEN BTK TECHNOLOGY CO., LTD.) 28 April 2020 (2020-04-28) <br> description, paragraphs 17-30, and figures 1-2 | 27-29 |
| Y | KR 20050003890 A (SAMSUNG ELECTRONICS CO., LTD.) 12 January 2005 (2005-01-12) <br> description, page 2, line 3-page 4, line 10, and figure 3 | 1, 4, 23 |
| A | JP 2002369394 A (SHARP K. K.) 20 December 2002 (2002-12-20) <br> entire document | 1-36 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **09 April 2024** | **15 April 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/074958**

| Patent document cited in search report | | | Publication date (day/month/year) | Patent family member(s) | | | Publication date (day/month/year) |
|---|---|---|---|---|---|---|---|
| CN | 112217246 | A | 12 January 2021 | None | | | |
| CN | 110113978 | A | 09 August 2019 | None | | | |
| CN | 201947178 | U | 24 August 2011 | None | | | |
| CN | 210430995 | U | 28 April 2020 | None | | | |
| KR | 20050003890 | A | 12 January 2005 | KR | 100497396 | B1 | 23 June 2005 |
| JP | 2002369394 | A | 20 December 2002 | None | | | |

Form PCT/ISA/210 (patent family annex) (July 2022)